(19) Europäisches Patentamt
European Patent Office
Office européen des brevets

(11) **EP 4 617 655 A1**

(12) **EUROPEAN PATENT APPLICATION**

(43) Date of publication:
**17.09.2025  Bulletin 2025/38**

(21) Application number: **25162568.7**

(22) Date of filing: **10.03.2025**

(51) International Patent Classification (IPC):
*G01N 30/86* *(2006.01)*

(52) Cooperative Patent Classification (CPC):
**G01N 30/8658;** G01N 30/72

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.03.2024  KR 20240034541**

(71) Applicant: **Samsung Electronics Co., Ltd.
Suwon-si, Gyeonggi-do 16677 (KR)**

(72) Inventors:
• **SHIN, Dongyeeb
16678 Suwon-si (KR)**
• **KWON, Hyukju
16678 Suwon-si (KR)**
• **KIM, Ji-Yeong
16678 Suwon-si (KR)**
• **BAEK, Seung Min
16678 Suwon-si (KR)**
• **LEE, Dongseon
16678 Suwon-si (KR)**

(74) Representative: **Elkington and Fife LLP
Prospect House
8 Pembroke Road
Sevenoaks, Kent TN13 1XR (GB)**

(54) **METHOD AND DEVICE FOR ANALYZING MATERIAL**

(57)     A sample analysis method includes obtaining chromatography data of a plurality of separated materials that are separated from a sample, obtaining mass spectra corresponding to first peaks of the chromatography data, determining, based on the obtained mass spectra, at least one peak corresponding to a target material from the first peaks of the chromatography data, and selecting a protocol for separating the sample based on a result of analyzing the at least one peak corresponding to the target material.

```
                    Start

        Obtain chromatography data              — 310

        Obtain mass spectrum                    — 330

   Determine peak corresponding to target material from peaks detected
   in chromatography based on mass spectra      — 350

   Select protocol for separating sample based on result of
   analyzing peak corresponding to target material   — 370

                    End
```

**FIG. 3**

EP 4 617 655 A1

**Description**

FIELD OF THE INVENTION

The disclosure relates to a material analysis.

BACKGROUND OF THE INVENTION

Chromatography may be configured to measure a sample injected into a measuring device by separating the sample over time through an interaction between a mobile phase and a stationary phase. Chromatography may refer to a method of performing qualitative and quantitative analysis based on a characteristic that elements included in the sample have different detection times (peak occurrence times) in the same measurement condition and the same measuring device.

When the sample including various elements is mixed with a mobile phase, and the sample mixed with the mobile phase flows into a stationary phase, the moving velocity that passes through the stationary phase may be different according to the characteristics of the elements included in the sample, and thereby, detection times for the elements may be different from each other.

Mass spectrometry may refer to a method of analyzing a particle based on a mass-to-charge ratio.

SUMMARY OF THE INVENTION

Additional aspects will be set forth in part in the description which follows and, in part, will be apparent from the description, or may be learned by practice of the presented embodiments of the disclosure.

According to an aspect of the disclosure, a sample analysis method may include obtaining chromatography data of a plurality of separated materials that are separated from a sample, obtaining mass spectra corresponding to first peaks of the chromatography data, determining, based on the obtained mass spectra, at least one peak corresponding to a target material from the first peaks of the chromatography data, and selecting a protocol for separating the sample based on a result of analyzing the at least one peak corresponding to the target material.

Embodiments may, for example, be implemented as a measurement condition auto-search (protocol selection) function for separating and detecting an analysis target material of a liquid chromatography (LC) analysis device.

Some embodiments may be applied to a function for analyzing a mass pattern of a material using mass spectrometry (MS).

Also, some embodiments may be applied to an algorithm that automates measurement condition search (protocol selection), result analysis (peak assignment: automatically find and define a peak of an analysis target material), and result reporting functions during an LC-MS analysis process and may be applied to the unmanned LC-MS analysis automation (LC-MS closed-loop) system design.

A report file may be implemented for organizing and storing an analysis result.

Further, embodiments may be applied to the development of a completely unmanned synthesis automation platform by implementing a function to transfer an analysis result of a synthesis condition to a database in real-time as an analysis module of the synthesis automation platform.

In addition, as an autonomous synthesis platform that autonomously finds a synthesis condition in addition to the automation platform is implemented as a feedback system that optimizes a synthesis condition by receiving a synthesis result as feedback in real-time, the proposed embodiments may be applied to a concept for accelerating material development by rapidly searching for synthesis condition optimization.

The proposed concept(s) may facilitate an autonomous (or automation) synthesis automation platform development by automating the analysis of synthesis conditions as an analysis module of the synthesis automation platform and delivering the result to the database in real-time.

The determining the at least one peak corresponding to the target material may include assigning a peak of the at least one peak to the target material, and the assigned peak may correspond to a time at which a mass spectrum that matches a mass pattern of the target material appears in the mass spectra.

The determining of the at least one peak corresponding to the target material may be performed based on a comparison between a mass pattern corresponding to the target material and a measured ion count of a mass-to-charge ratio of interest in each peak of the first peaks of the chromatography data.

The determining of the at least one peak corresponding to the target material may include excluding a peak among the first peaks of the chromatography data having a determined score that is less than a threshold score.

The determining of the at least one peak corresponding to the target material may be performed by using a first score based on an ion count of a mass-to-charge ratio of interest for each of the first peaks of the chromatography data and a second score based on an ion count of a protonated mass-to-charge ratio.

The determining of the at least one peak corresponding to the target material may include determining a greatest ion count, and the greatest ion count may correspond to an ion count of a mass-to-charge ratio of interest within a mass-to-charge ratio range set based a scan margin of an equipment configured to measure mass-to-charge ratios.

The obtaining of the chromatography data may include performing liquid chromatography in a protocol selected based on a partition coefficient.

The selecting of the protocol for separating the sample may include determining whether to change the selected protocol based on retention times of the at least one peak.

The method may include determining to change the selected protocol from a first protocol to a second protocol, and based on changing the selected protocol to the second protocol, repeating the operations of obtaining chromatography data, obtaining the mass spectra, and determining the at least one peak, in the second protocol.

The method may include providing the selected protocol to a robot configured to generate a reaction of materials to prepare the sample, and dispensing the sample and an eluent for analyzing the sample.

According to an aspect of the disclosure, an analysis device may include a memory storing instructions, and a processor configured to execute the instructions to obtain chromatography data of a plurality of separated materials that are separated from a sample, obtain mass spectra corresponding to first peaks of the chromatography data, determine, based on the obtained mass spectra, at least one peak corresponding to a target material from the first peaks of the chromatography data, and select a protocol for separating the sample based on a result of analyzing the at least one peak corresponding to the target material.

The processor may be further configured to execute the instructions to assign a peak of the at least one peak to the target material, and the assigned peak may correspond to a time at which a mass spectrum that matches a mass pattern of the target material appears in the mass spectra.

The processor may be configured to execute the instructions to determine the at least one peak corresponding to the target material based on a comparison between a mass pattern corresponding to the target material and a measured ion count of a mass-to-charge ratio of interest in each peak of the first peaks of the chromatography data.

The processor may be configured to execute the instructions to determine the at least one peak corresponding to the target material by excluding a peak among the first peaks of the chromatography data having a determined score that is less than a threshold score.

The processor may be configured to execute the instructions to determine the at least one peak corresponding to the target material using a first score based on an ion count of a mass-to-charge (m/z) ratio of interest for each of the first peaks of the chromatography data and a second score based on an ion count of a protonated mass-to-charge ratio.

The processor may be configured to execute the instructions to determine the at least one peak corresponding to the target material by determining a greatest ion count, and the greatest ion count may correspond to an ion count of a mass-to-charge ratio of interest within a mass-to-charge ratio range set based on a scan margin of an equipment configured to measure a mass-to-charge ratio.

The processor may be further configured to execute the instructions to obtain the chromatography data by performing liquid chromatography in a protocol selected based on a partition coefficient.

The processor may be configured to execute the instructions to select a protocol for separating the sample by determining whether to change the selected protocol based on retention times of the at least one peak.

The processor may be configured to execute the instructions to determine to change the selected protocol from a first protocol to a second protocol, and based on changing the selected protocol to the second protocol, repeat obtaining chromatography data, obtaining mass spectra, and determining the at least one peak, in the second protocol.

The processor may be further configured to execute the instructions to provide the selected protocol to a robot configured to generate a reaction of materials to prepare the sample, and dispense the sample and an eluent for analyzing the sample.

According to an aspect of the disclosure, a material analysis system may include a robot device configured to prepare a sample comprising a plurality of materials, a measuring device configured to receive the sample from the robot device and generate measurement data by measuring the sample based on a first protocol, where the measurement data includes chromatography data of a plurality of separated materials that are separated from the sample and mass spectra corresponding to first peaks of the chromatography data, and an analysis device configured to obtain, from the measuring device, the chromatography data and the mass spectra, determine, based on the obtained mass spectra, at least one peak corresponding to a target material from the first peaks of the chromatography data, and select a protocol for separating the sample based on a result of analyzing the at least one peak corresponding to the target material.

The analysis device may be further configured to assign a peak of the at least one peak to the target material, and the assigned peak may correspond to a time at which a mass spectrum that matches a mass pattern of the target material appears in the mass spectra.

The analysis device may be further configured to select a second protocol for separating the sample based on the result of analyzing the at least one peak corresponding to the target material.

The analysis device may be further configured to select the second protocol based on a retention time of at least one material of the plurality of materials being outside of a predetermined reference time range.

The analysis device may be further configured to select the first protocol for separating the sample based on a retention time of at least one material of the plurality of materials being within a predetermined reference time range.

BRIEF DESCRIPTION OF DRAWINGS

The above and other aspects, features, and advantages of certain embodiments of the disclosure will be more apparent from the following description taken in conjunction with the accompanying drawings, in which:

FIG. 1 is a diagram illustrating a material analysis system according to an embodiment;
FIG. 2 is a diagram illustrating an analysis device and a measurement device according to an embodiment;
FIG. 3 is a flowchart illustrating a material analysis method according to an embodiment;
FIG. 4 is a diagram illustrating measurement data based on liquid chromatography and mass spectrometry according to an embodiment;
FIG. 5 is a diagram illustrating peaks of chromatography data and measured ion counts of a mass-to-charge ratio of interest by peaks according to an embodiment;
FIG. 6 is a diagram illustrating ion counts of a mass-to-charge ratio of interest determined by considering a measurement error according to an embodiment;
FIG. 7 is a diagram illustrating a score based on measured ion counts of a mass-to-charge ratio of interest by peaks according to an embodiment;
FIG. 8 is a diagram illustrating a result of assigning starting materials and generated products to peaks of chromatography data according to an embodiment;
FIG. 9 is a diagram illustrating a determination of an initial protocol according to an embodiment;
FIGS. 10A to 11C are diagrams illustrating determinations of protocols according to an embodiment;
FIGS. 12A to 12C are diagrams illustrating material analysis reports according to an embodiment; and
FIG. 13 is a block diagram illustrating a configuration of an analysis device according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c..

Hereinafter, will be described in detail with reference to the attached drawings. In the drawings, like reference numerals refer to like elements throughout and sizes of constituent elements may be exaggerated for convenience of explanation and the clarity of the specification. Also, embodiments described herein may have different forms and should not be construed as being limited to the descriptions set forth herein.

Terms, such as first, second, and the like, may be used herein to describe components. However, each of these terminologies may be used merely to distinguish the corresponding component from other component(s). For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The use of the terms "a" and "an" and "the" and similar referents are to be construed to cover both the singular and the plural. The steps of all methods described herein can be performed in any suitable order unless otherwise indicated herein or otherwise clearly contradicted by context, and are not limited to the described order.

It will also be understood that when an element is referred to as being "on" or "above" another element, the element may be in direct contact with the other element or other intervening elements may be present. The singular forms include the plural forms unless the context clearly indicates otherwise. It should be understood that, when a part "comprises" or "includes" an element, unless otherwise defined, other elements are not excluded from the part and the part may further include other elements.

Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

The use of any and all examples, or exemplary language (e.g., "such as") provided herein, is intended merely to better illuminate the disclosure and does not pose a limitation on the scope of the disclosure unless otherwise claimed.

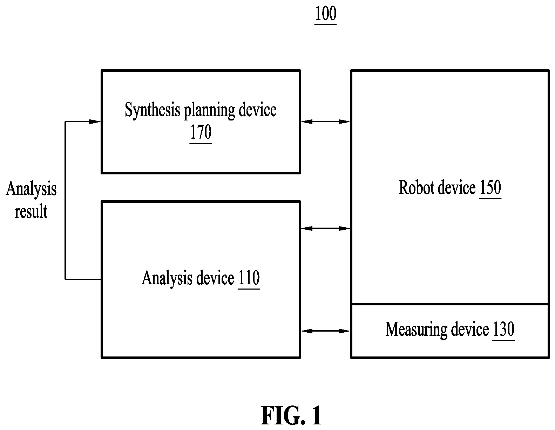

FIG. 1 is a diagram illustrating a material analysis system according to an embodiment.

The material analysis system 100 may perform an analysis and synthesis of materials. For example, the material analysis system 100 may synthesize a product by causing a reaction of a plurality of starting materials. An example in which a product is synthesized by a reaction between a first starting material sm1 and a second starting material sm2 is mainly described.

The material analysis system 100 may analyze a sample. The sample may be a mixture of the plurality of starting materials and the product described above. The material analysis system 100 may analyze a sample including a product generated under a specific synthesis condition. The material analysis system 100 may analyze the sample under a specific measurement condition. The material analysis system 100 may automatically determine a measurement condition (e.g., a protocol) for the sample based on an analysis result. **In** addition, the material analysis system 100 may determine a synthesis condition based on a result of analyzing the sample under the selected measurement condition. The material analysis system 100 may automatically determine at least one of a measurement condition for a prepared sample and a synthesis condition for preparing the sample. Accordingly, the material analysis system 100 may provide an automated synthesis and analysis platform. The synthesis condition may include a type of a catalyst, a type of a base, a type of a ligand, a type of a solvent, a temperature, etc.

According to an embodiment, a synthesis planning device 170 may determine a condition (e.g., a synthesis condition) for synthesis (e.g., chemical synthesis) of a target product. For example, reaction paths of a chemical database (e.g., Reaxys) may be organized by reaction types (e.g., Suzuki reaction, Buchwald-Hartwig amination, and Ullmann reaction). The synthesis planning device 170 may recommend a synthesis condition for a target product using a chemical database organized by reaction types. For example, the synthesis planning device 170 may determine a recommended synthesis condition from synthesis input information including a reaction type to proceed synthesis, a reactant (e.g., a starting material), and a target product. The synthesis condition may include a catalyst, a base, a solvent, and a temperature, for synthesizing a target product from a starting material. The synthesis condition may be referred to as a reaction condition.

For example, the synthesis planning device 170 may search for a synthesis condition corresponding to the synthesis input information in a look-up table (LUT) corresponding to the organized chemical database. The LUT may include synthesis conditions by a reaction type, a reactant, and a target product from the organized chemical database. As another example, the synthesis planning device 170 may determine a recommended synthesis condition from the synthesis input information based on a machine learning model. The machine learning model may be a model that is designed and trained to output a recommended synthesis condition from the synthesis input information and may include, for example, a neural network. The machine learning model may be trained by using the organized chemical database described above. However, the determination of the synthesis condition is not limited to the example described above. The synthesis condition may be manually input by a user. The synthesis planning device 170 may transmit the determined and/or input synthesis condition to a robot device 150.

The robot device 150 may receive the recommended synthesis condition from the synthesis planning device 170. However, embodiments are not limited thereto and the robot device 150 may receive the synthesis condition from the user. The robot device 150 may generate a synthesis recipe from the synthesis condition. However, embodiments are not limited thereto. For example, the synthesis planning device 170 may generate a synthesis recipe and the robot device 150 may receive the synthesis recipe from the synthesis planning device 170. In this case, the synthesis planning device 170 may search for the synthesis recipe corresponding to the synthesis condition, the starting material, and the target product from a recipe repository. The synthesis recipe may include, for example, materials (e.g., a starting material, a catalyst, a base, and a solvent) to be dispensed, an order in which materials are dispensed to generate target materials, and an amount of dispensed materials, as well as a temperature. The robot device 150 may generate a synthesis schedule from the synthesis condition and/or the synthesis recipe. The synthesis schedule may include a robot command for operating an individual module of the robot device 150 to cause a reaction of materials according to the synthesis recipe. The robot device 150 may generate a quantified action sequence corresponding to the synthesis recipe by considering molecular weights of materials used for the synthesis, purity, and concentration of a chemical. The action sequence may be independent of hardware specification of an individual robot module. The robot device 150 may translate the action sequence into a robot command to control each robot hardware component.

The robot hardware of the robot device 150 may include, for example, a pantry robot, a dispensing robot, a reaction robot, and a transfer robot. The pantry robot may transfer a chemical container stored in a pantry to a dispensing module. The dispensing robot of the dispensing module may dispense a chemical to glass (e.g., a glass reaction vial). The reaction robot may be configured to generate a reaction in the glass reaction vial. For example, the reaction robot may maintain a specific temperature and may perform a stir operation. The transfer robot may transfer a sampled material (e.g.,

a sample) from a reactant in the glass reaction vial to a sample preparation module. In addition, the transfer robot may inject the prepared sample into a measuring device 130. The robot hardware may operate based on a robot command corresponding to the synthesis recipe described above. As the robot device 150 operates according to the synthesis schedule, the robot device 150 may perform an experiment for the reaction corresponding to the received recommended synthesis condition.

According to an embodiment, the robot device 150 may prepare the sample by aliquoting a synthesis solution according to a set reaction time. The robot device 150 may provide the measuring device 130 with the sample prepared by sample preparation. The reaction time may be variously set at, for example, 1 hour, 2 hours, 3 hours, 4.5 hours, etc.

For reference, the selection of the synthesis condition by the synthesis planning device 170 is described for better understanding. However, an operation of selecting a protocol (e.g., the measurement condition) for analyzing the sample by an analysis device 110 is mainly described below.

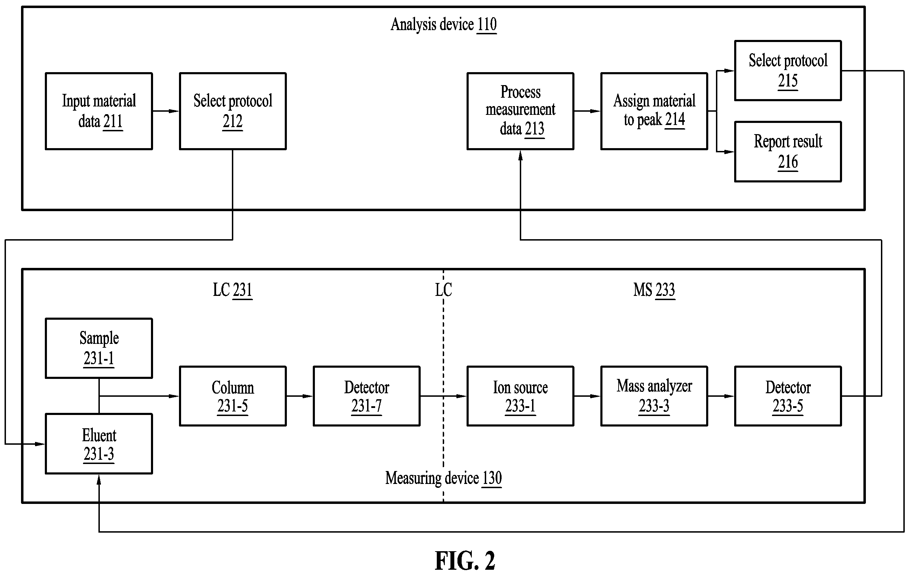

The measuring device 130 may measure the prepared sample. The robot device 150 may inject the sample into the measuring device 130. However, embodiments are not limited thereto and the measuring device 130 may measure a sample injected by a user. The measuring device 130 may perform chromatography analysis and mass analysis on the sample. For example, the measuring device 130 may include liquid chromatography (LC)-mass spectrometer (MS) (LC-MS) equipment. The LC-MS equipment may include an LC unit and an MS unit. A configuration of the measuring device 130 is described with reference to FIG. 2.

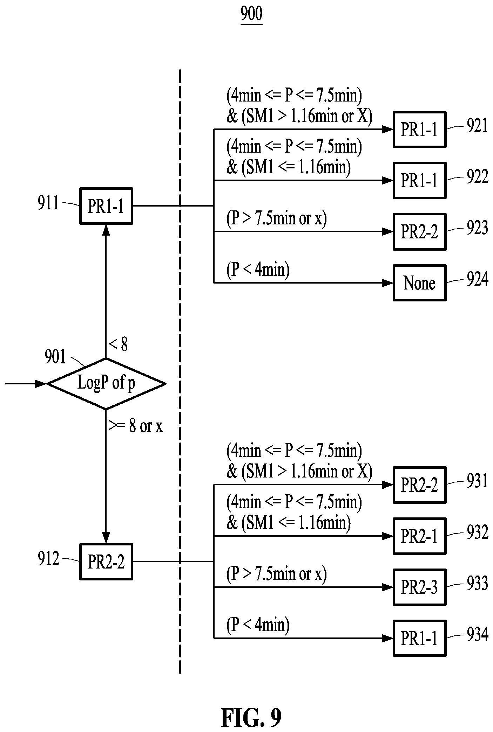

The measuring device 130 may measure the sample in the selected protocol. The protocol may include a measurement condition for the sample. The protocol may be selected by the analysis device 110 from a plurality of candidate protocols. The selection of the protocol is described with reference to FIGS. 9 to 11C. The measuring device 130 may iteratively measure the sample until an adjustment of the protocol is completed. For example, the measuring device 130 may measure the sample in an initially selected protocol and may measure the sample again in a protocol adjusted by the analysis device 110. For reference, when the protocol is changed, the prepared sample may be newly injected into the measuring device 130. The sample injected for each measurement may be a sampled material from the same mixture (e.g., a reactant). The robot device 150 may inject the sample into the measuring device 130 and the sample may be injected into the measuring device 130 by a user. The material analysis system 100 may iteratively change the protocol and may iteratively measure until a retention time satisfies a reference time range in an analysis result of measurement data on the sample. For reference, since each protocol defines the composition of an eluent, changing the protocol may refer to changing the composition of the eluent.

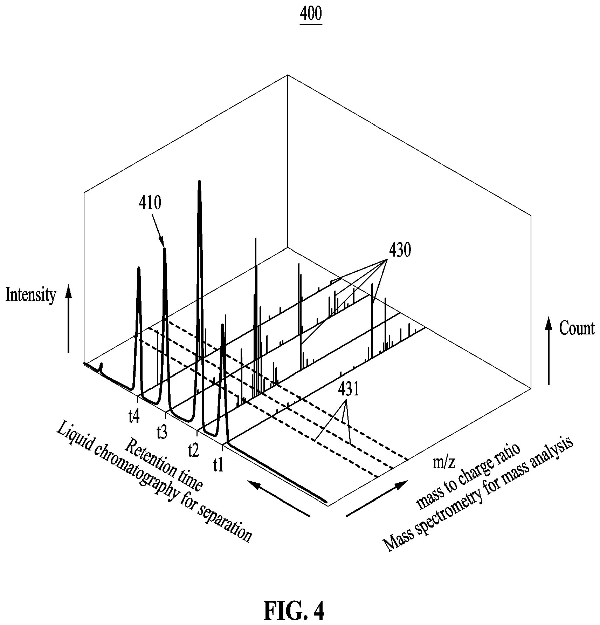

The analysis device 110 may analyze generated measurement data by measuring the sample by the measuring device 130. The measurement data may include chromatography data (e.g., ultraviolet (UV) absorbance intensity of a material) and mass spectrometry data (e.g., an ion count by a mass-to-charge ratio). The chromatography data and the mass spectrometry data are described with reference to FIG. 4. The analysis device 110 may identify a material corresponding to a peak of the chromatography data based on a mass spectrum. For reference, the chromatography data may represent intensity (e.g., light absorbance) detected by a detector as materials separated by the chromatography (e.g., liquid chromatography) pass through the detector (e.g., a UV detector) over time. The peak may be a sharp portion that appears as the intensity increases and decreases over time in the chromatography data and may be a portion in which higher intensity than a baseline of the intensity appears. The peak may appear at the time when a material separated from the sample passes the detector. A time interval corresponding to the peak may be referred to as a retention time.

However, it may be difficult or otherwise not possible to know which material each peak indicates based on peaks of the chromatography data. The analysis device 110 may identify a peak corresponding to candidate materials based on a mass spectrum corresponding to each peak and a mass pattern of the candidate material (e.g., a starting material and a product). The analysis device 110 may assign (or map) the candidate material to the identified peak. The identification of the peak is described with reference to FIGS. 4 to 7. For example, the analysis device 110 may assign starting materials and a product to corresponding peaks of the peaks of the chromatography data.

The analysis device 110 may determine a protocol (e.g., a measurement condition) based on an analysis result of the measurement data. The analysis result may include quantitative data on a peak in which a material is identified and/or assigned in the chromatography data. For example, the analysis device 110 may determine the retention time of materials (e.g., the starting materials and the product) included in the sample based on the peak assignment result. The analysis device 110 may determine whether the retention times of the materials satisfy reference time ranges. When the retention times are out of the reference time ranges, the analysis device 110 may change the protocol. The analysis device 110 may determine a protocol to be changed based on a result (e.g., a retention time of an identified peak and a resolution factor) of analyzing the measurement data obtained in the selected protocol. The analysis device 110 may sequentially select a protocol from the plurality of candidate protocols and may analyze and evaluate the measurement data obtained in each selected protocol until a recommended protocol is determined. When the retention times are within the reference time ranges, the analysis device 110 may determine the selected protocol to be the recommended protocol. The recommended protocol may be a predicted protocol, in which materials are most stably separated according to a corresponding reaction, among the plurality of candidate protocols. The determination of the recommended protocol is described with reference to FIG. 9.

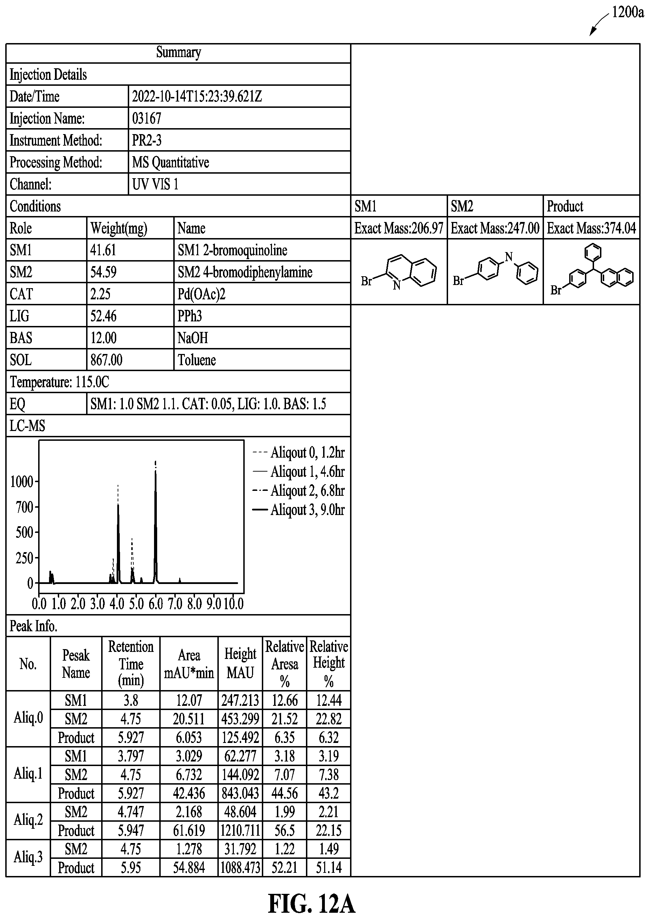

When the recommended protocol is determined, the analysis device 110 may generate a result report. The result report may include the peak assignment result described above and quantitative data corresponding to each peak. The result report is described with reference to FIGS. 12A to 12C. For example, the analysis device 110 may provide the result report to the synthesis planning device 170. However, embodiments are not limited thereto and the analysis device 110 may also provide the result report to the user. For example, the analysis device 110 may visualize the result report through a display. The synthesis planning device 170 may store the result report.

The synthesis planning device 170 may evaluate and/or change the synthesis condition based on the result report. The synthesis planning device 170 may determine the synthesis condition based on the analysis result (e.g., the result report) by the analysis device 110 described above. For example, the synthesis planning device 170 and/or the analysis device 110 may determine a yield of a target product from the analysis result for the sample. The synthesis planning device 170 may determine the synthesis condition based on the yield of the target product. For example, the synthesis planning device 170 may change the synthesis condition when the yield of the target product is less than a threshold yield. When the yield of the target product is greater than or equal to a target yield, the synthesis planning device 170 may determine the synthesis condition to be a recommended synthesis condition. The synthesis planning device 170 may determine whether to change and/or recommend the synthesis condition based on analysis results of a predetermined number (e.g., 6 times) of reactions.

As described above, the material analysis system 100 may automatically perform processes to search for a protocol (e.g., a measurement condition) that is suitable for a characteristic of a material subjected to the analysis in the sample (e.g., a mixed solution). The material analysis system 100 may reduce the time and resources consumed to identify a peak in the chromatography data and select a protocol based on quantitative data (e.g., a retention time of a material) of the identified peak.

In addition, the material analysis system 100 may perform peak assignment based on the mass spectrometry even if a sophisticated database of a chromatogram peak of a specific material in a specific environment (e.g., limited equipment, a solvent, and a catalyst condition) does not exist. The material analysis system 100 may not require a sophisticated database when selecting a protocol for separating a material in liquid chromatography.

In addition, the material analysis system 100 may implement a synthesis process of a material as an automated closed loop by automating analysis and adjustment of the synthesis condition.

For reference, although FIG. 1 illustrates that the synthesis planning device 170, the robot device 150, the measuring device 130, and the analysis device 110 are separate devices, embodiments are not limited thereto. Two or more of the devices illustrated in FIG. 1 may be integrated with each other.

FIG. 2 is a diagram illustrating an analysis device and a measurement device according to an embodiment.

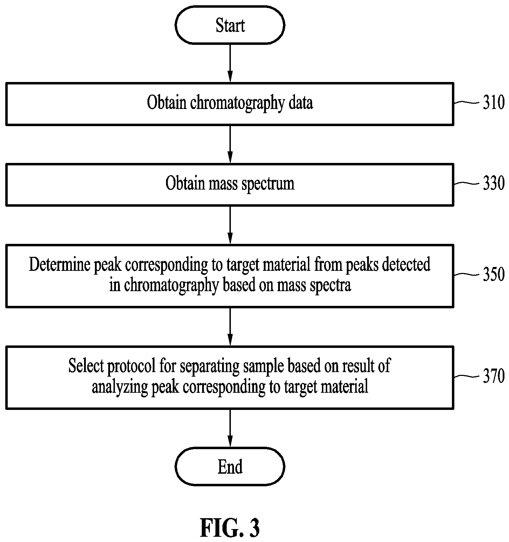

The analysis device 110 may automatically search for a protocol for LC for a sample 231-1. For example, the analysis device 110 may select a condition (e.g., a protocol) for measuring the sample 231-1. The analysis device 110 may perform protocol selection 212 based on a material data input 211 (e.g., simplified molecular input line entry system (SMILES) data) before obtaining measurement data by the measuring device 130. The SMILES data may be data representing a material structure as an atom, a bond, a ring, aromaticity, and a branch as an element of a molecular structure. The analysis device 110 may select an initial protocol based on a value (e.g., a partition coefficient) determined from the SMILES data. After obtaining the measurement data, the analysis device 110 may select a protocol based on an analysis result (e.g., a peak assignment result) of the measurement data. The analysis device 110 may perform measurement data processing 213, material assignment to a peak 214, protocol selection 215, and result reporting 216. The measurement data processing 213 may include extraction of an ion count of a mass-to-charge ratio of interest by peak of the chromatography data from the measurement data. The material assignment to a peak 214 may include score determination for each peak based on the extracted ion count for the mass-to-charge ratio and material identification based on the determined score. A detailed operation of the analysis device 110 is described with reference to FIG. 3.

The measuring device 130 may measure the sample 231-1 in the protocol selected by the analysis device 110 described above. The measuring device 130 may include an LC device 231 and an MS device 233. Additionally, the measuring device 130 may include an interface (e.g., a fluid path) between an LC device 231 and an MS device 233. The sample 231-1 measured based on the chromatography by the LC device 231 may be transferred to the MS device 233 via the interface. The interface between the LC device 231 and the MS device 233 may be, for example, a fluid path. Materials separated by the LC device 231 may be transferred along the fluid path and may be delivered to the MS device 233. Accordingly, LC measurement and MS measurement of the sample 231-1 may be sequentially performed with a small delay. However, the interface between the LC device 231 and the MS device 233 is not limited to the example described above.

The LC device 231 may separate a plurality of materials from the sample 231-1 and may measure characteristics of the separated materials. For example, the LC device 231 may perform LC on the injected sample 231-1. The sample 231-1 may include a plurality of materials (e.g., analysis target materials). The sample 231-1 may be a mixture of analysis target materials. The analysis target materials (or analytes) may be monomolecular substances or organic materials.

Depending on a protocol (e.g., an LC condition) to be described below, the efficiency and accuracy of separation and detection of the sample 231-1 may vary.

The chromatography may include separation (e.g., elution) of a plurality of materials from the sample 231-1 and detection of the separated materials. The sample 231-1 dissolved in a mobile phase in the chromatography may be eluted into a plurality of materials by an interaction among the sample 231-1, a stationary phase, and the mobile phase. The material eluted from the sample 231-1 may be a monomolecular substance, but embodiments are not limited thereto. The chromatography in which the mobile phase is liquid may be referred to as LC. The LC may be performed in a protocol selected for the elution of the sample 231-1. In one or more embodiments, the protocol may be a condition set for material separation (e.g., elution) and detection from the sample 231-1 based on LC and may also be referred to as an LC condition. The protocol may include, for example, a type of a column 231-5 (e.g., the LC column 231-5), a type of a mobile phase, a flow rate of the mobile phase, a type of a detector 231-7, and a temperature of the column 231-5.

The LC device 231 may include the column 231-5 and the detector 231-7. The sample 231-1 may be separated into a plurality of materials in the column 231-5, and the detector 231-7 may detect characteristics of the separated materials. For example, the LC device 231 may deliver the mobile phase at a required flow rate by using a pump. The mobile phase may be an eluent 231-3. The eluent 231-3 may be determined to be liquid defined in the selected protocol by the analysis device 110. The eluent 231-3 that is suitable for the selected protocol may flow by the pump in the LC device 231. The LC device 231 may inject the sample 231-1 into a flowing mobile phase (e.g., the eluent 231-3) by using an autosampler. The sample 231-1 may be transferred to the column 231-5 together with the mobile phase (the eluent 231-3) through a fluid path. The column 231-5 may be a tube through which the sample flows, and in the column, separation of the sample 231-1 may occur. As the sample 231-1 and the mobile phase pass through the column 231-5, a plurality of materials may be separated from the sample 231-1. This is because each compound moves at a different speed according to an interaction between the mobile phase (the eluent 231-3) and a material of the column 231-5. For example, when the mixed sample 231-1 passes through the column 231-5, the mixed sample 231-1 may be separated by hydrophobic interaction in the column 231-5. The materials separated from the sample 231-1 may pass through the detector 231-7. As described above, since the materials are separated by a velocity difference, the time taken for each material to pass the detector 231-7 may be different. The detector 231-7 may record intensity information (e.g., absorption intensity information) by time.

The detector 231-7 (e.g., an LC detector) may include a UV-visible light (UV-Vis) detector, a fluorescence detector, and an oscillatory detector. Herein, the UV-Vis detector is mainly described. In the example described above, the materials separated from the sample 231-1 in the column 231-5 may pass between a UV source and a UV detector in different time slots. The UV source may emit a UV ray to a material that passes. The UV detector may measure the UV intensity that passes through the material. The UV intensity passing through the material may have the intensity decreased by the intensity absorbed from the material from the UV intensity emitted from the UV source. The measuring device 130 may record a difference between the UV intensity emitted from the UV source and the UV intensity detected by the UV detector as the intensity information (e.g., the absorption intensity information).

The type of the column 231-5 may include reverse phase-LC (RP-LC) and normal phase-LC (NP-LC). Although the present disclosure mainly describes the reverse phase, embodiments are not limited thereto.

The mobile phase (the eluent 231-3) may be a solvent that moves the sample 231-1 through the column 231-5. For example, the mobile phase (the eluent 231-3) may be a mixture of water and an organic solvent (e.g., methanol or acetonitrile) in the RP-LC. As another example, the mobile phase (the eluent 231-3) may be a mixture of a non-polar solvent (e.g., hexane) and a polar solvent (e.g., ethyl acetate) in the NP-LC.

A mobile phase (the eluent 231-3) flow rate may represent an amount of the mobile phase (the eluent 231-3) that passes through the column 231-5. The mobile phase (the eluent 231-3) flow rate may affect an ability to effectively separate sample 231-1 and pass through the column 231-5.

The stability of an analysis in the LC may vary depending on the temperature of the column 231-5. For example, the column 231-5 at a high temperature may increase the solubility of the sample 231-1 and may improve the separation efficiency.

The MS device 233 may detect mass characteristics of the separated materials in the LC device 231. The separated materials from the LC device 231 may be sequentially injected into the MS device 233 and the MS device 233 may detect mass characteristics according to the order of injection. The MS device 233 may generate mass spectrometry data by a time point based on the detected mass characteristic. For reference, as described below with reference to FIG. 4, the time point described above may be based on a time axis of the LC by the LC device 231. The mass spectrometry data at a specific time point based on the time axis of the LC may include an ion count by a mass-to-charge ratio of the material injected into the MS device 233 from the LC device 231 at a corresponding time point. For example, the MS device 233 may include an ion source 233-1, a mass analyzer 233-3, and a detector 233-5.

The ion source 233-1 may ionize a material injected into the MS device 233. The MS device 233 may also include an ion guide (e.g., an electrostatic lens) for efficiently introducing an additionally generated ion.

The mass analyzer 233-3 may separate ionized materials (e.g., ionized molecules). For example, the mass analyzer 233-3 may separate ionized materials by a mass-to-charge ratio. The mass-to-charge ratio may be expressed as a ratio of mass-to-charge (m/z).

The detector 233-5 may detect and record counts (e.g., ion counts) of the separated ionized molecules by the mass-to-charge ratio. The detector 233-5 may record an ion count by a mass-to-charge ratio for a material injected at a specific time. Mass analysis data for a specific material may include an ion count by a mass-to-charge ratio of the material. As described above, when materials separated by the LC device 231 are sequentially injected into the MS device 233 over time and the MS device 233 may generate mass analysis data corresponding to a separated material corresponding to each time slot. Accordingly, the MS device 233 may generate mass analysis data for each time slot.

For reference, as transferring from the LC device 231 to the MS device 233, a delay may occur between the detection based on chromatography in the LC device 231 and the detection based on mass spectrometry in the MS device 233. This is because separated materials require time to move through an interface between the LC device 231 and the MS device 233. The measuring device 130 and/or the analysis device 110 may compensate for a delay caused by the transfer from the LC device 231 to the MS device 233. For example, the measuring device 130 and/or the analysis device 110 may adjust the time of mass spectrometry data based on the time of the chromatography data by shifting the time of the mass spectrometry data of the MS device 233 based on the delay described above. However, the delay may not need to be compensated, and the delay may be insignificant enough to be ignored. Accordingly, a material detected at a specific time of the chromatography data may be the same as a material detected in the mass spectrometry data at the same time. Hereinafter, FIG. 3 describes a material analysis method by an analysis device.

FIG. 3 is a flowchart illustrating a material analysis method according to an embodiment.

In operation 310, an analysis device may obtain chromatography data. For example, the analysis device may obtain chromatography data of a plurality of materials separated from a sample based on LC. The chromatography data may be data measured by a measuring device as described above with reference to FIG. 2 and may represent light absorbance of materials separated from the sample by time. For reference, before selecting a protocol according to operation 370, the LC may be performed in an initial protocol corresponding to a value (e.g., a partition coefficient) determined based on a molecular structure of a product.

In operation 330, the analysis device may obtain mass spectra. For example, the analysis device may obtain mass spectra corresponding to peaks of the chromatography data based on the mass spectrometry of the separated materials. For example, the analysis device and/or the measuring device may integrate the mass spectrometry data of the separated materials by time in a peak unit of the chromatography data. The mass spectrometry data integrated into the peak unit may be referred to as a mass spectrum. The analysis device and/or the measuring device may generate a mass spectrum by aggregating ion counts of an individual mass-to-charge ratio in the mass spectrometry data belonging to the same peak. The analysis device may receive a mass spectrum by peak from the measuring device or may generate a mass spectrum based on the mass spectrometry data received from the measuring device.

In operation 350, the analysis device may determine a peak corresponding to a target material from peaks detected in the chromatography based on the mass spectra. The target material may be a material subjected to the analysis and may be, for example, a starting material and a product of synthesis. The analysis device may process raw measurement data (e.g., the chromatography data and the mass spectrometry data) of the measuring device (e.g., an LC-MS device). For example, the analysis device may detect a peak in the chromatography data, may determine a retention time by peak, may determine a peak area, and may determine a peak height. For the mass spectrometry data, the analysis device may determine a mass spectrum of a corresponding peak by integrating the mass spectrometry data belonging to the peak as described in operation 330. The mass spectrum may include an ionization count by a mass-to-charge ratio of a material corresponding to the peak.

The analysis device may determine a score (e.g., a matching score) based on a mass pattern of the target material and the mass spectrum of each peak. The mass pattern may be a distribution pattern of an isotope of the target material and may be expressed as a mass-to-charge ratio corresponding to each isotope and a ratio of the existence of isotope of the corresponding mass-to-charge ratio. The mass pattern may be referred to as an isotope pattern. For example, the mass pattern may express an abundance (or an abundance ratio) of the most abundant isotope (e.g., a reference isotope) among isotopes of the target material as a reference value (e.g., 100) and may express the remaining isotopes as a relative abundance ratio (e.g., a value between 0 and 100) compared to the reference value. The mass pattern may include a relative abundance ratio (hereinafter referred to as an abundance ratio) of all isotopes for the target material. However, embodiments are not limited thereto and the mass pattern may include a reference value of a reference isotope and abundance ratios of some isotopes. For example, the mass pattern may include abundance ratios (e.g., abundance ratios of the top three isotopes) of a predetermined number of isotopes and the isotopes of the mass pattern may be selected in descending order from the reference isotope based on the abundance ratio.

The analysis device may identify a peak having the highest matching score determined based on the mass pattern and the mass spectrum of the target material among the plurality of peaks as a peak corresponding to the target material. Accordingly, the analysis device may assign the target material to the identified peak. The analysis device may identify peaks respectively corresponding to the starting materials and the product and may assign a corresponding material to an identified peak.

In operation 370, the analysis device may select a protocol for separating the sample based on a result of analyzing the peak corresponding to the target material. For example, the analysis device may analyze the peak to which the target material is assigned in operation 350. The analysis device may determine whether to change the protocol based on the retention time of the materials in the peak to which the target material is assigned. The analysis device may prepare a result report when the selected protocol is determined to be a recommended protocol. The result report may include information on a corresponding experiment (e.g., synthesis and measurement experiment). The result report may include the peak assignment result described above and additionally analyzed information (e.g., a peak area and a peak height) for the peaks. The analysis device may automatically generate the result report without a manual analysis by a human being. The analysis device may effectively organize and store the analysis result for each experiment by generating the result report. The result report is described with reference to FIGS. 12A to 12C.

When the analysis device determines to change the protocol, the analysis device may select a protocol based on retention times of peaks to which the materials are assigned from a plurality of candidate protocols. When a new protocol is selected by the analysis device, the measuring device may re-measure the sample in the selected new protocol. When the remeasured sample is obtained, the analysis device may repeat operations 310, 330, 350, and 370. While repeating operations 310, 330, 350, and 370 described above, the analysis device may sequentially change the protocol based on a decision tree until the recommended protocol is determined.

As described with reference to FIG. 1, the analysis device may deliver the result report to a synthesis planning device when the recommended protocol is determined. The synthesis planning device may automate the synthesis of a target material in real-time and completely unmanned by using the result report. The synthesis planning device may receive a synthesis result (e.g., a synthesis yield) as feedback in real-time and may actively adjust a synthesis condition based on the synthesis result. Accordingly, the material analysis system may accelerate material development by rapidly searching for optimization of a measurement condition (e.g., a protocol) and optimization of a synthesis condition.

FIG. 4 is a diagram illustrating measurement data based on LC and mass spectrometry according to an embodiment.

Measurement data 400 may include chromatography data based on LC and mass spectrometry data based on mass spectrometry.

The chromatography data may include a liquid chromatogram 410. A horizontal axis of the liquid chromatogram 410 may represent a time, and a vertical axis thereof may represent intensity. Herein, an example in which the intensity of the liquid chromatogram 410 is UV absorbance is mainly described. As described above, the liquid chromatogram 410 may represent the light absorbance of separated materials by time.

After passing through an LC device, a material separated from a sample may pass through an MS device. The MS device may generate mass spectrometry data by ionizing the separated material and measuring the ionized material. The mass spectrometry data may be referred to as total ion chromatogram (TIC) data. As described above, the MS device may perform scan for the mass spectrometry at each time point along the time axis of the liquid chromatogram 410. Accordingly, the measuring device may generate TIC data for each time point of the liquid chromatogram 410. The TIC data may represent all mass spectrum intensities belonging to the same scan (e.g., a scan at a specific time point). For example, the mass spectrum intensity corresponding to a specific mass-to-charge ratio may be the number of ions detected in the corresponding mass-to-charge ratio. In the TIC data, the horizontal axis may represent a time (or a mass-to-charge ratio (m/z)), and the vertical axis may represent an ion count (e.g., an amount of mass detected at each time point). Each time point in the time axis of the TIC data may correspond to the mass-to-charge ratio (m/z). This is because the time of the ionized material to reach the detector may vary depending on the mass of the material. For reference, the time unit of the time axis of the TIC data in the mass spectrometry may be different from the time unit of the time axis of the liquid chromatogram 410. The TIC data may be in a millisecond (ms) unit, and the liquid chromatogram 410 may be in a minute (min) unit. FIG. 4 describes an example in which the horizontal axis of the TIC data is interpreted as the mass-to-charge ratio (m/z) instead of time. In addition, FIG. 4 illustrates a mass spectrum integrated with mass spectrometry data of time points belonging to the same peak in the liquid chromatogram 410 is illustrated.

Four peaks are illustrated as an example in the liquid chromatogram 410 of FIG. 4. The four peaks may be detected at time points $t_1$, $t_2$, $t_3$, and $t_4$. The analysis device may obtain a mass spectrum for each peak of the liquid chromatogram 410. For example, the mass spectrum may represent an accumulated ion count during a retention time corresponding to a corresponding peak by a mass-to-charge ratio within a mass-to-charge ratio scan range. A mass-to-charge ratio resolution of a mass spectrum may vary depending on the specification of the MS device. The analysis device may extract an ion count of a mass-to-charge ratio among a mass spectrum 430 corresponding to a peak (e.g., a peak of $t_1$). For example, the analysis device may determine mass-to-charge ratios of some isotopes of the target material to be a mass-to-charge ratio of interest. The analysis device may determine mass-to-charge ratios corresponding to the top three isotopes of the target material to be mass-to-charge ratios of interest 431. The analysis device may extract ion counts corresponding to the mass-to-charge ratios of interest 431 in the mass spectrum 430.

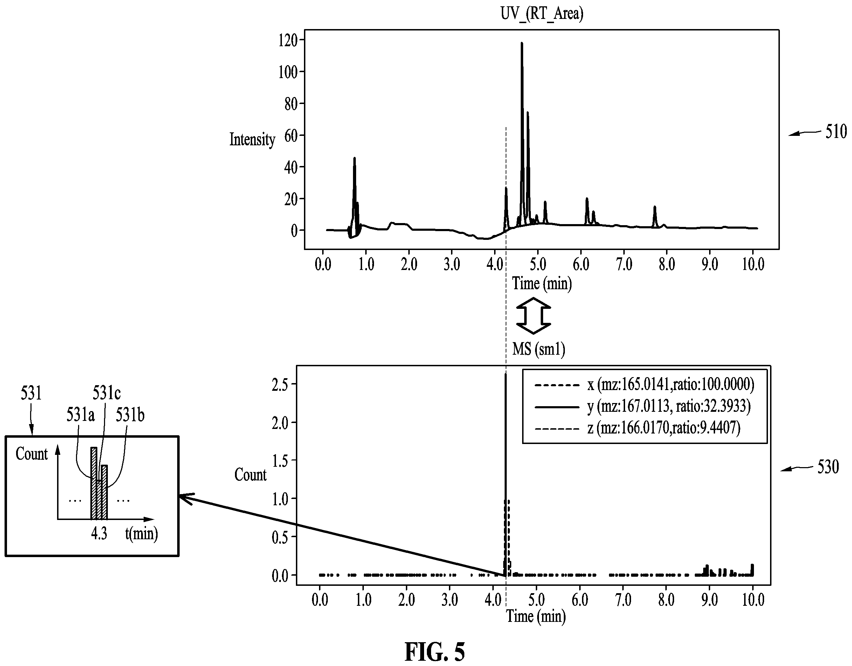

FIG. 5 is a diagram illustrating peaks of chromatography data and measured ion counts of a mass-to-charge ratio of interest by peaks according to an embodiment. FIG. 5 illustrates an ion count corresponding to a mass-to-charge ratio of interest for each time point based on the time axis of the liquid chromatogram 510.

According to one or more embodiments, an analysis device may extract ion counts 531 of mass-to-charge ratios of interest based on a time axis of a liquid chromatogram 510. For example, in FIG. 5, mass-to-charge ratios of isotopes x, y, and z of a target material (e.g., a starting material sm1) may be 165.0141, 167.0113, and 166.0170, respectively. The isotope x may be the most abundant isotope in the target material and an abundance ratio may be set to a reference value of 100%. The isotope y may be abundant at a ratio of 32.3933% to the isotope x and the isotope z may be abundant at a ratio of 9.4407% to the isotope x. The isotopes x, y, and z may be the top three isotopes in descending order based on an abundance ratio in the target material. The analysis device may determine the mass-to-charge ratios 165.0141, 167.0113, and 166.0170 corresponding to the isotopes x, y, and z to be the mass-to-charge ratio of interest. For example, the analysis device may extract an ion count 531a corresponding to the mass-to-charge ratio of interest 165.0141, an ion count 531b corresponding to the mass-to-charge ratio of interest 167.0113, and an ion count 531c corresponding to the mass-to-charge ratio of interest 166.0170 at a time point corresponding to 4.3 minutes. The analysis device may visualize mass information 530 including extracted ion counts for the mass-to-charge ratios of interest based on the time axis of the liquid chromatogram 510. The mass information 530 may be data in which ion counts corresponding to the mass-to-charge ratios of interest are organized based on the time axis of the liquid chromatogram 510 in the mass spectrum of FIG. 5.

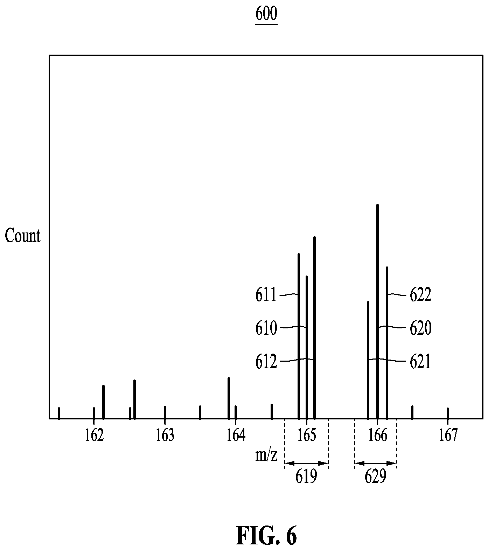

FIG. 6 is a diagram illustrating ion counts of a mass-to-charge ratio of interest determined by considering a measurement error according to an embodiment. FIG. 6 describes the extraction of the mass information 530 by considering a measurement error or a deviation.

An analysis device may extract mass information by considering a measurement error or a deviation. This is because an error may occur between a theoretical mass-to-charge ratio value and a mass-to-charge ratio value measured by an MS device. For reference, a theoretical mass-to-charge ratio value of a target material may be determined based on a theoretical mass value calculated by SMILES.

The analysis device may determine the greatest ion count to be an ion count of a mass-to-charge ratio of interest within a mass-to-charge ratio range set based on a scan margin of a device that measures a mass-to-charge ratio. For example, depending on a deviation of a device (e.g., an MS device) that measures a mass-to-charge ratio, a measured mass-to-charge ratio may include an error. The analysis device may set a mass-to-charge ratio range based on the scan margin determined based on isotopes of the target material. FIG. 6 illustrates an example of a mass spectrum 600 obtained with respect to a specific peak. When a scan margin is $\pm$ 0.3 and a mass-to-charge ratio of interest is 165.0141, a mass-to-charge ratio range 619 may be between 164.7141 and 165.3141. The analysis device may determine a greatest ion count 612 from ion counts 610, 611, and 612 in the mass-to-charge ratio range 619 to be an ion count for the corresponding mass-to-charge ratio. The analysis device may generate the mass information 530 described with reference to FIG. 5 by using an ion count determined based on the mass-to-charge ratio of interest and the scan margin from the mass spectrum 600. However, the scan margin is not limited to the description provided above and may be set depending on the specification of the MS device.

In addition, the analysis device may determine the ion count corresponding to each mass-to-charge ratio of interest by considering protonation. During the process of injecting a sample into the MS device and ionizing the sample, a hydrogen ion may be combined with the sample. When the hydrogen ion is combined, a mass-to-charge ratio of a corresponding molecule may increase by +1 compared to an original mass-to-charge ratio. However, the hydrogen ion may not be combined depending on an environment. Accordingly, to handle the combination of a hydrogen ion, the analysis device may extract mass information with respect to both a theoretical mass-to-charge ratio of interest (e.g., m/z) and a protonated mass-to-charge ratio of interest (e.g., m/z + 1).

When the mass-to-charge ratio of interest is 165.0141, the protonated mass-to-charge ratio of interest may be 166.0141. The analysis device may generate mass information by extracting an ion count corresponding to the protonated mass-to-charge ratio of interest. **In** addition, the analysis device may extract an ion count by considering the scan margin for the protonated mass-to-charge ratio of interest. For example, when the scan margin is $\pm$ 0.3, a mass-to-charge ratio range 629 may be between 165.7141 and 166.3141. The analysis device may determine a greatest ion count 620 from ion counts 620, 621, and 622 in the mass-to-charge ratio range 629 to be an ion count for the corresponding protonated mass-to-charge ratio of interest. The analysis device may generate additional mass information by using an ion count determined based on the protonated mass-to-charge ratio of interest and the scan margin from the mass spectrum 600.

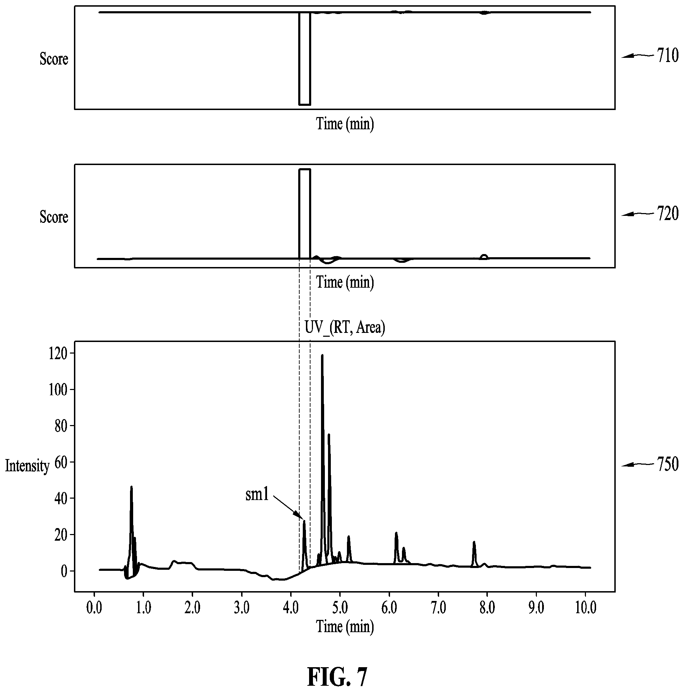

As described below with reference to FIG. 7, the analysis device may determine a matching score for each peak by using mass information based on a mass-to-charge ratio of interest and mass information based on a protonated mass-to-charge ratio of interest.

FIG. 7 is a diagram illustrating a score based on measured ion counts of a mass-to-charge ratio of interest by peaks according to an embodiment.

According to one or more embodiments, an analysis device may assign a peak to a target material where the peak corresponds to a time when a mass spectrum that matches a mass pattern of the target material appears in mass spectrometry. For example, the analysis device may identify a peak corresponding to the target material, based on mass information (e.g., an ion count in a mass-to-charge ratio of interest per peak) extracted from measurement data and a mass pattern (e.g., an isotope pattern) of the target material, and may assign the target material to the identified peak. The analysis device may determine the peak corresponding to the target material from detected peaks based on a comparison between a mass pattern corresponding to the target material and a measured ion count of a mass-to-charge ratio of interest of each of the detected peaks. As described above, the mass pattern may be an abundance ratio (or a distribution ratio) of isotopes of the target material. The analysis device may determine a matching score based on the mass information (e.g., an ion count of a mass-to-charge ratio of interest) extracted for each peak and the mass pattern of the target material. The analysis device may determine a matching score for each peak based on the extracted mass information of FIGS. 5 and 6. For reference, the mass information may be information obtained by aggregating ion counts by a mass-to-charge ratio, where the ion counts are detected in a range between a start time and an end time of each peak in a chromatogram.

According to one or more embodiments, the analysis device may determine a peak corresponding to the target material from detected peaks using a first score 710 based on an ion count of a mass-to-charge ratio of interest (m/z ratio of interest) for each of the detected peaks, and a second score 720 based on an ion count of an adjacent mass-to-charge (m/z) ratio. The adjacent mass-to-charge ratio may be, for example, a protonated mass-to-charge ratio of interest (e.g., m/z + 1) described with reference to FIG. 6. The analysis device may determine the first score 710 for peaks of the chromatogram based on the ion count of the mass-to-charge ratio of interest and the mass information of the target material. The analysis device may determine the second score 720 based on mass information of the adj acent mass-to-charge ratio (e.g., the protonated mass-to-charge ratio of interest). Accordingly, two scores, which are the score based on the mass-to-charge ratio of interest for each peak and the score based on the adjacent mass-to-charge ratio, may be determined. The analysis device may determine a high score from the first score 710 and the second score 720 for each peak. The analysis device may identify a peak having the highest score among the determined scores (e.g., the matching scores) as the peak corresponding to the target material. The analysis device may assign the target material to a corresponding peak in a chromatogram 750. The matching score described above may be determined as in Equation (1):

$$\text{Score} = \alpha 1 \ \text{Sum\_x} - \alpha 2 \ \{\text{Sum\_x} \times \text{Ratio\_y} - \text{Sum\_y} + \text{Sum\_x} \\ \times \text{Ratio\_z-Sum\_z}\} \tag{1}$$

The score (e.g., the matching score) of Equation (1) described above may be a score that quantifies a match level between measured mass information (e.g., an ion count aggregated in a peak by a mass-to-charge ratio of interest) and a theoretical mass pattern of the target material for a separated material. In Equation (1), Sum_x may denote a sum of measured ion counts in a peak for the most abundant isotope x among isotopes of the target material. Sum_y may denote a sum of measured ion counts in a peak for the second most abundant isotope y. Sum_z may denote a sum of measured ion counts in a peak for the third most abundant isotope z. $\alpha 1$ and $\alpha 2$ may denote weights. Ratio_y may denote a theoretical relative abundance ratio of the isotope y to the isotope x in the target material and Ratio_z may denote a theoretical relative abundance ratio of the isotope z to the isotope x in the target material. Sum_x may denote a partial score based on an ion count, and {Sum_x × Ratio_y-Sum_y + Sum_x × Ratio_z-Sum_z} may denote a partial score based on an error between a theoretical ratio and a measured ratio.

When $\alpha 1$ increases, a ratio of the partial score based on the ion count may increase, and when $\alpha 2$ increases, a ratio of the partial score based on the ratio error may increase. For reference, embodiments are not limited to the description provided above and the analysis device may identify a peak corresponding to the target material by using only the ratio error-based partial score. As another example, the analysis device may primarily identify a candidate peak by using the ratio error-based partial score and may secondarily identify a peak corresponding to the target material by using the count-based score among candidate peaks.

The analysis device may assign the target material to a peak having the greatest matching score with the target material. The analysis device may perform an analysis of the peak to which the target material is assigned and may collect an analysis result for the assigned peak. For example, the analysis device may obtain a retention time corresponding to the peak, a peak height, and a peak area. The analysis result obtained for the peak may be used for the selection of the protocol or may be included in the result report.

For reference, the analysis device may exclude a peak, of which a determined score is less than a threshold score, from peaks detected in LC from peak assignment for the target material. For example, the analysis device may exclude a peak of which the determined score is less than $10^6$ from the peak assignment. The analysis device may prevent a peak assignment error due to noise occurring during an experiment.

In FIGS. 5 to 7 described above, matching score determination and peak assignment for one target material are described. However, the analysis device may perform the operations described above on a plurality of target materials. For example, the analysis device may determine a matching score for each of the starting materials and a product of synthesis and may assign a peak.

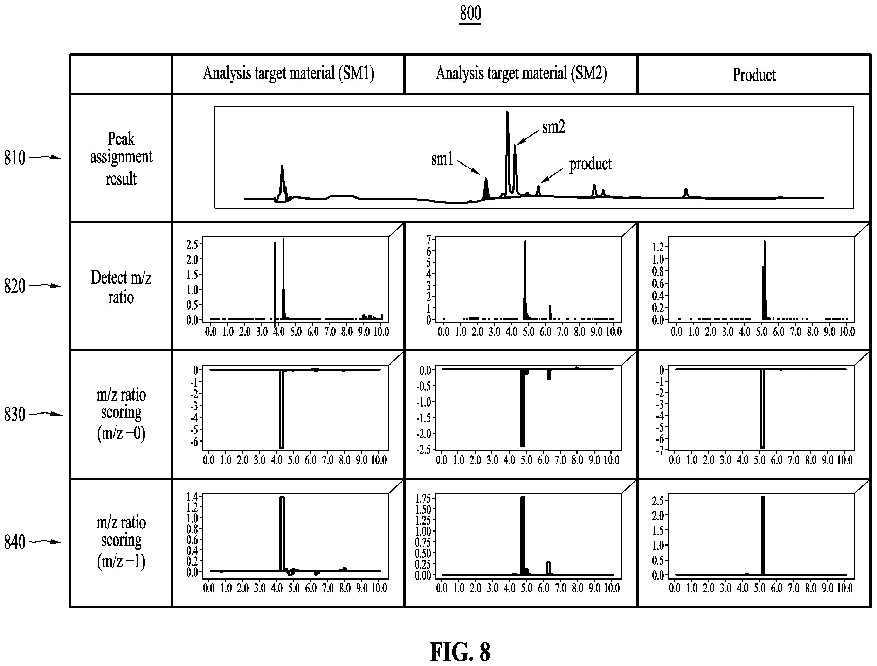

FIG. 8 is a diagram illustrating a result of assigning starting materials and generated products to peaks of chromatography data according to an embodiment.

An analysis device may generate an analysis result 800 for a plurality of target materials. For example, the analysis device may identify peaks corresponding to a first starting material sm1, a second starting material sm2, and a product from peaks of chromatography data 810 as shown in FIG. 8. The analysis device may assign target materials to peaks in the chromatography data 810 by performing the operations described with reference to FIGS. 3 to 7. The analysis device may determine mass information 820 for each target material, a first score 830 based on a mass-to-charge ratio of interest, and a second score 840 based on an adjacent mass-to-charge ratio.

The analysis device may effectively assign a corresponding material to a sample (e.g., a contaminated sample) in which various peaks appear. When synthesizing a material, not only a starting material and a result material but also conditional materials, such as a catalyst and a solvent, may be included in the sample. The analysis device may effectively identify a peak corresponding to the target material in a sample in which materials other than the target material are mixed. The analysis device may reduce the time taken for peak assignment for a new sample or a contaminated sample.

FIG. 9 is a diagram illustrating the determination of an initial protocol according to an embodiment.

To determine a recommended protocol, an analysis device may sequentially select a plurality of candidate protocols and may analyze and evaluate measurement data obtained in a selected protocol. The analysis device may iteratively select and re-measure a protocol until retention times analyzed in the selected protocol satisfy reference time ranges. For example, the analysis device may select a first protocol from the plurality of candidate protocols and may obtain first measurement data. The analysis device may select another protocol when a first analysis result for the first measurement data deviates from a reference range of the first protocol. The analysis device may select a second protocol from the plurality of candidate protocols based on the first analysis result (e.g., retention times of the starting material and the result material). As described below, the analysis device may select a protocol based on a decision tree. Reference ranges in a specific protocol may vary depending on a depth of the decision tree.

In FIGs. 9 to 11C, five candidate protocols PR1-1, PR1-2, PR2-1, PR2-2, and PR2-3 are included in a plurality of candidate protocols. For example, each protocol may define a composition ratio of liquid in which deionized (DI) water, acetonitrile (ACN), and isopropyl alcohol (IPA) are combined. Each protocol may have a different composition ratio. The analysis device may sequentially select a protocol from the plurality of prepared candidate protocols in a method described below.

The selection of the protocol may be divided into initial protocol selection and protocol change. Although FIG. 9 illustrates an example of a decision tree for selecting a protocol, embodiments are not limited thereto. The selection of the protocol may be implemented by using a machine learning model (e.g., a neural network).

The analysis device may select an initial protocol based on a chemical characteristic of the target material. For example, the analysis device may select the initial product based on a chemical characteristic of a product. The analysis device may select the initial protocol by using a partition coefficient LogP as the chemical characteristic of the product. The partition coefficient LogP may represent a degree of distribution of a material between two immiscible phases as a concentration ratio. Since the partition coefficient LogP is a metric of representing a degree of hydrophobicity, as the partition coefficient LogP increases, the hydrophobicity of the material may increase, and thereby, retention may increase. Since the partition coefficient LogP is an indicator of retention due to a proportional relationship with the hydrophobicity, the analysis device may select the initial protocol using the partition coefficient LogP. For reference, the partition coefficient LogP may be calculated from input SMILES data of the target material (e.g., a product). For example, the partition coefficient LogP may be determined from the SMILES data using cheminformatics software known as RDKit. The analysis device may determine a partition coefficient of the product before injecting the sample into the measuring device and may determine the initial protocol based on the calculated partition coefficient.

For example, in operation 901, the analysis device may select a PR1-1 protocol 911 when the partition coefficient LogP determined for a product p is less than a threshold (e.g., 8). The analysis device may select a PR2-2 protocol 912 when the partition coefficient LogP is greater than or equal to the threshold (e.g., 8).

The analysis device may obtain chromatography data based on LC in the selected protocol based on the partition coefficient LogP of the product p. The analysis device may determine whether to change the protocol based on the chromatography data and the mass spectrometry data. The analysis device may determine whether to change the selected protocol based on the retention times of determined peaks. For example, the analysis device may determine whether to change the protocol using a retention time of a peak to which the target material is assigned based on the data measured in the initial protocol. The decision tree shown in FIG. 9 may include a condition (e.g., a reference time range) of the retention time for each depth. P may denote a retention time of a product and SM1 may denote a retention time of a first starting material.

For example, when the analysis device selects the PR1-1 protocol 911 to be the initial protocol, the analysis device may determine whether to change the protocol to one of PR1-1 protocols 921, 922, and a PR2-2 protocol 923. The reference time range for the retention time P of the product p may be greater than or equal to 4 minutes and less than or equal to 7.5 minutes. The analysis device may maintain the PR1-1 protocol 921 when the retention time P of the product p is within the reference time range described above. The analysis device may select the PR2-2 protocol 923 when the retention time P of the product p deviates from the reference time range described above and exceeds 7.5 minutes. For the analysis device, a case 924 in which the retention time P of the product p is less than 4 minutes may rarely occur. Although the synthesis has not actually failed, the analysis device may regard that the synthesis has failed and may request for the next synthesis. This is because the PR1-1 protocol is the slowest dissolution condition, and the PR2-3 protocol is the fastest dissolution condition in FIG. 9. However, when another protocol for a slower dissolution condition than the PR1-1 protocol exists, the analysis device may select a protocol that delays dissolution.

When changing the selected protocol to another protocol, the analysis device may obtain chromatography data in the changed protocol, may obtain a mass spectrum, and may determine peaks. When the protocol is changed, the analysis device may deliver the selected protocol to a robot that performs reaction of materials to prepare a sample (and/or an aliquot of the sample), and dispenses the sample and an eluent for analyzing the sample. The robot may receive a sample reinjection command. Since a sample prepared in the previous analysis remains, the robot may reinject the remaining sample. In the analysis device, an eluent of an analysis condition corresponding to a reselected protocol may flow. The analysis device may analyze the reinjected sample. The analysis device may perform an analysis after the measurement of the sample is completed in the selected protocol by the measuring device. For reference, when the analysis is terminated as the selection of an optimal protocol is completed after the analysis, the prepared sample may be moved from an injection location to a storage location.

In addition, when the PR2-2 protocol 912 is selected to be the initial protocol, the analysis device may select one of a PR2-2 protocol 931, a PR2-1 protocol 932, a PR2-3 protocol 933, and a PR1-1 protocol 934 based on the retention time P of the product p and a retention time SM1 of the first starting material. The reference time range may be a range set based on a result obtained by collecting existing data and analyzing the data, and when a desired retention time is achieved, the protocol may be optimized. For example, the reference time range may be a time range corresponding to a time at which a specific product is to be synthesized.

The analysis device may optimize the protocol using a same decision factor condition (e.g., the retention time) through measurement data interpretation even if a material field has changed. The analysis device may automatically reselect a protocol step by step based on a chemical characteristic (e.g., a partition coefficient) of the material and a peak assignment result using the decision tree. The analysis device may select an optimal protocol using a similar material characteristic by field even without collecting millions of pieces of data.

The analysis device may iteratively select a protocol using the peak assignment result and a retention time of a peak to which the target material is assigned until a recommended protocol is finally selected. The optimization of the protocol may involve iteratively selecting a protocol until reaching the recommended protocol.

FIG. 9 illustrates the selection of an initial protocol and the selection of the following protocol. However, embodiments are not limited thereto. The analysis device may use a deeper decision tree than the decision tree shown in FIG. 9. Hereinafter, protocol selection after the protocol determined in FIG. 9 is described.

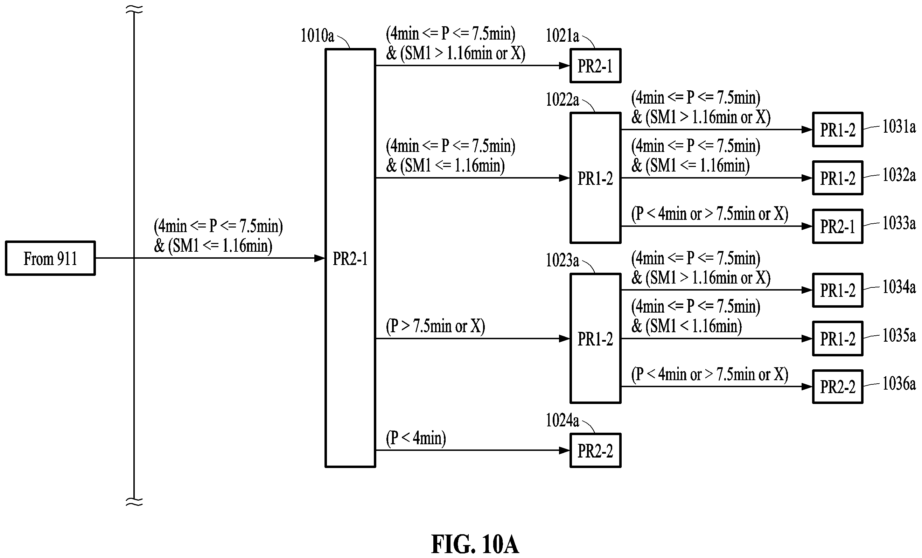

FIGS. 10A to 11C are diagrams illustrating determination of protocols according to an embodiment.

In FIG. 10A, an analysis device may select a PR2-1 protocol 1010a when a retention time P of a product analyzed in an initially selected protocol 911 is greater than or equal to 4 minutes and less than or equal to 7.5 minutes and a retention time SM1 of a first starting material is less than or equal to 1.16 minutes. The analysis device may select one of a PR2-1 protocol 1021a, a PR1-2 protocol 1022a, a PR1-2 protocol 1023a, and a PR2-2 protocol 1024a based on a comparison between a reference time range and retention times in the PR2-1 protocol 1010a. The PR2-1 protocol 1021a and the PR2-2 protocol 1024a may be determined to be the recommended protocol. The analysis device may reselect one of protocols 1031a, 1032a, 1033a, 1034a, 1035a, and 1036a to be the recommended protocol from the PR1-2 protocol 1022a and the PR1-2 protocol 1023a, based on the retention times.

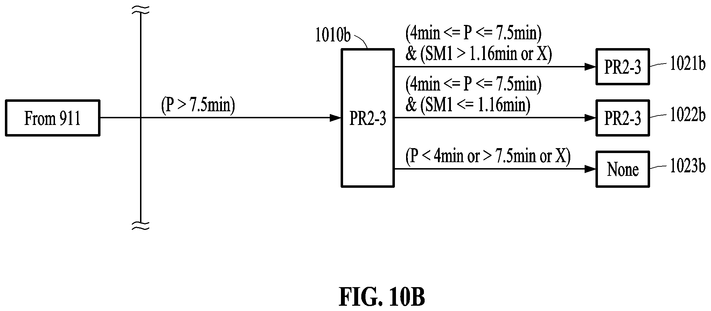

Similarly, in FIG. 10B, the analysis device may select a PR2-3 protocol 1010b when a retention time P of a product analyzed in the initially selected protocol 911 exceeds 7.5 minutes. The analysis device may determine one of protocols 1021b, 1022b, and 1023b to be the recommended protocol based on the decision tree.

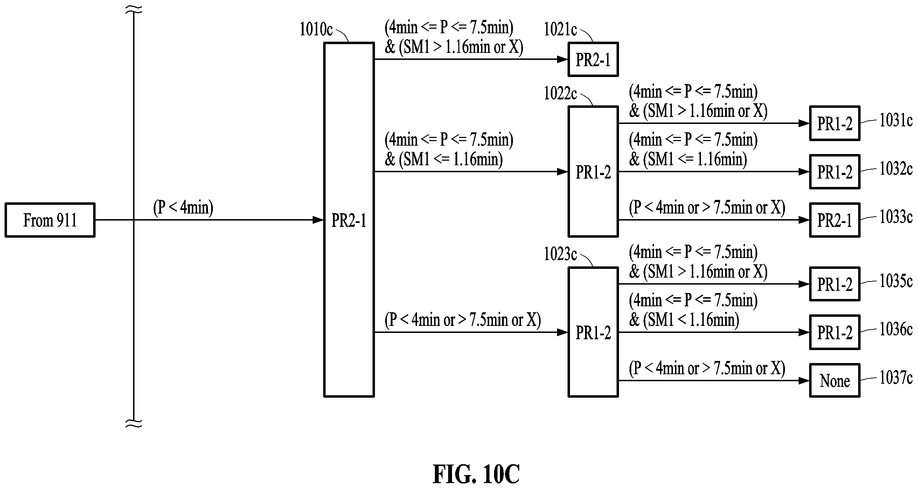

In FIG. 10C, when the retention time P of the product analyzed in the initially selected protocol 911 is less than 4 minutes, the analysis device may select a PR2-1 protocol 1010c. The analysis device may select one protocol from protocols 1021c, 1022c, and 1023c based on the decision tree and then may select one protocol from protocols 1031c, 1032c, 1033c, 1035c, 1036c, and 1037c.

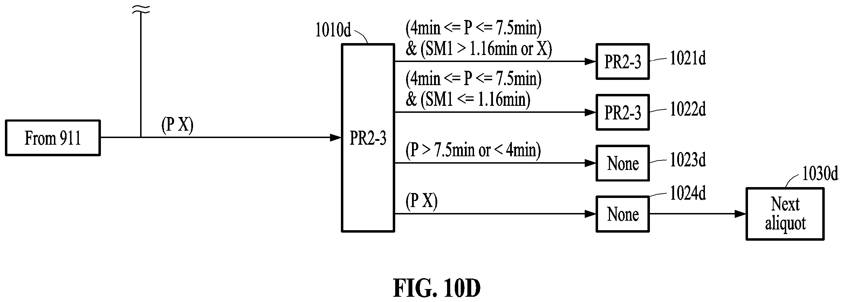

In FIG. 10D, the analysis device may select a PR2-3 protocol 1010d when the retention time P of the product analyzed in the initially selected protocol 911 does not exist. The analysis device may determine one of protocols 1021d and 1022d to be the recommended protocol based on the decision tree. The absence of the retention time P of the product may be a failure of peak assignment to the product. When the retention time P of the product does not exist in lastly selected protocols 1023d and 1024d or deviates from a reference time range, the analysis device may regard that the synthesis has failed and may request for a next synthesis (e.g., next aliquot 1030d).

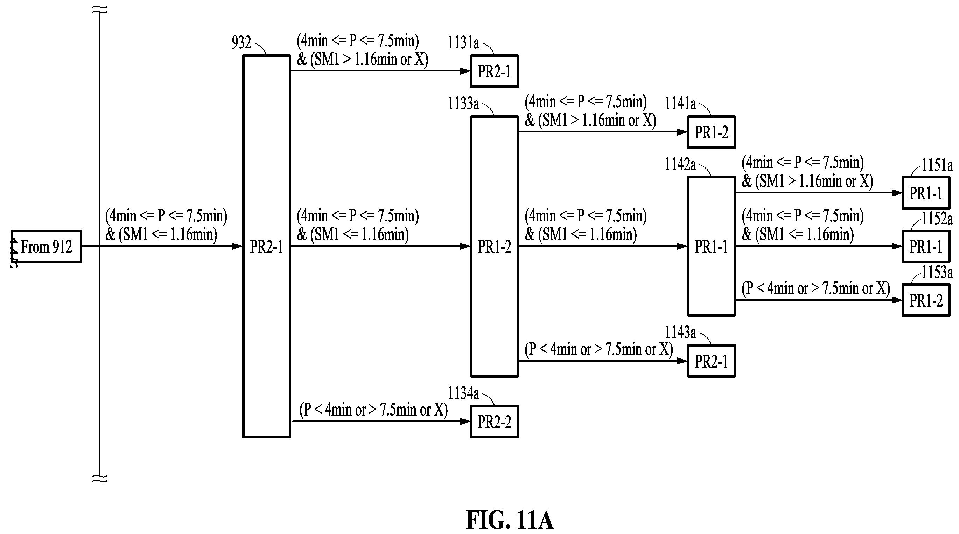

FIG. 11A illustrates branches of a decision tree when the PR2-1 protocol 932 is selected to be a following protocol of the initially selected protocol 912. The analysis device may sequentially select protocols 1133a and 1142a until reaching recommended protocols 1131a, 1141a, 1151a, 1152a, 1153a, 1143a, and 1134a, based on the decision tree.

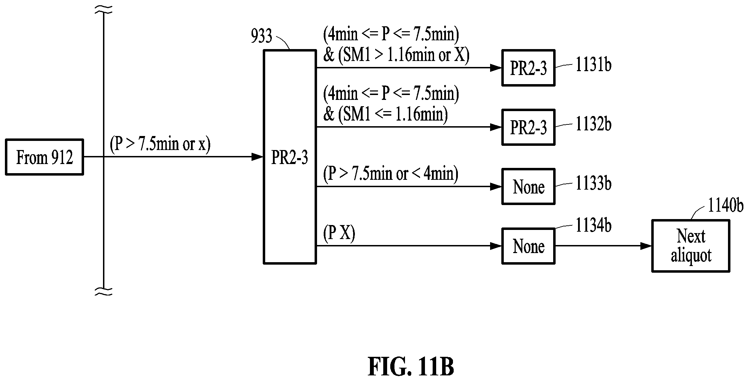

FIG. 11B illustrates branches of a decision tree when the PR2-3 protocol 933 is selected to be a following protocol of the initially selected protocol 912. The analysis device may select a protocol from protocols 1131b, 1132b, and 1133b or may determine that the synthesis has failed 1134b. When the synthesis has failed, the analysis device may request a following aliquot 1140b.

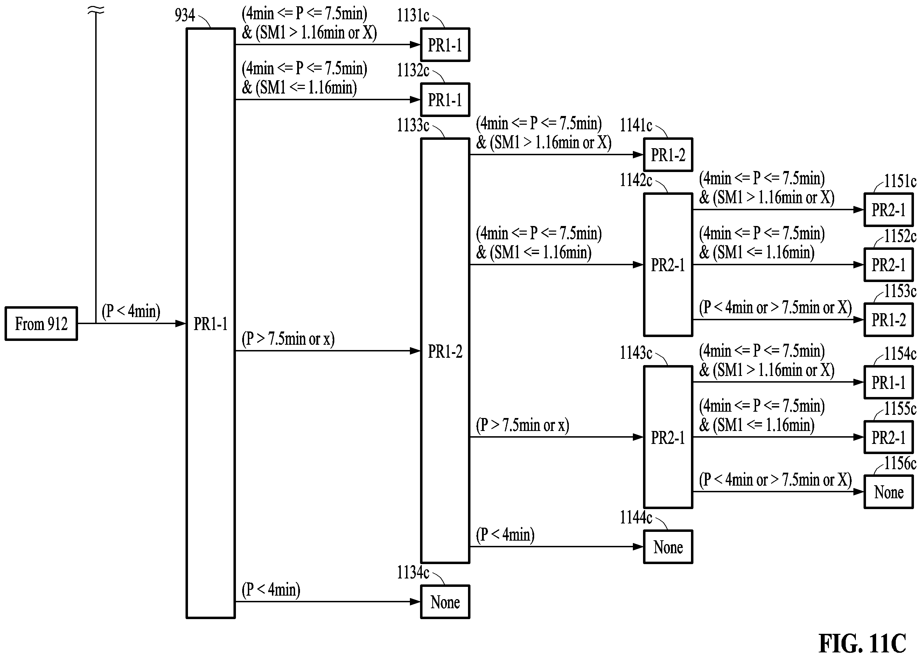

FIG. 11C illustrates branches of a decision tree when the PR1-1 protocol 934 is selected to be a following protocol of the initially selected protocol 912. The analysis device may sequentially select protocols 1133c, 1142c, and 1143c until reaching recommended protocols 1131c, 1132c, 1141c, 1151c, 1152c, 1153c, 1154c, and 1155c, based on the decision tree. However, the analysis device may also determine that the synthesis has failed in specific branches 1134c, 1144c, and 1156c. In this case, the analysis device may request a following aliquot.

FIGS. 12A to 12C are diagrams illustrating material analysis reports according to an embodiment.

When a recommended protocol is determined, an analysis device may generate a report (e.g., a result report) in which measurement and analysis results in the recommended protocol are organized. The result report may include peaks to which target materials (e.g., starting materials and a product) are assigned and information about other detected peaks (e.g., peak information). The peak information may include a retention time, a peak area, and a peak height of a corresponding peak. The calculation of the peak area may be referred to as peak integration. The analysis device may set a baseline for each peak based on a starting point (e.g., a point at which inclination increases) and an ending point (e.g., a point at which the inclination decreases) of a peak. The analysis device may determine an area of a peak based on the baseline. The result report may include a mass spectrum corresponding to a peak or mass information extracted in correspondence with a mass-to-charge ratio of interest.

The result report may include various analysis results for a specific synthesis condition. The result report may include a synthesis experiment time, a reaction condition (e.g., a condition reagent, a temperature, and a reaction time), and a chromatogram image showing a peak to which a target material is assigned in addition to the peak information and the mass spectrum described above. The result report may include reaction summary information by reaction time. The reaction summary information may include an image in which chromatogram images of various reaction times overlap with each other and peak information of the target material by reaction time. Since the analysis device manages an analysis result for an aliquot of a sample by reaction time as one result report, data management may be improved.

FIG. 12A illustrates reaction summary information. For example, a result report 1200a may include an analysis report by reaction time (e.g., 1.2 hours, 4.6 hours, 6.8 hours, and 9.0 hours) between starting materials. The result report 1200a of FIG. 12A may include an image in which chromatograms are overlapped, peak information of a target material, and various synthesis information (e.g., an experiment period, a reaction condition, molecular structures, and mass values of a starting material and a product). The reaction condition may include names, masses, equivalence ratios (EQ), temperatures, solution concentrations, and reaction times of all injected reagents (e.g., a starting material (SM1 and SM2), a product, a catalyst (CAT), a ligand (LIG), a base (BAS), and a solvent(SOL)) participating in the reaction.

A user may easily identify synthetic kinetics over time from the chromatogram. Since peaks of the chromatogram are overlapped and displayed, the user may easily identify a change of a peak by reaction time. The user may intuitively recognize an increase and decrease of peaks over time and a quantitative change (e.g., a peak area change and a peak height change) through the overlapping chromatogram image. The peak area change may imply a reaction trend (e.g., whether a product increases or decreases as the reaction time increases). Whether a product decreases as a peak area of a starting material decreases or whether a peak area of a product increases while the peak area of the starting material is fixed may be shown in the chromatogram image by reaction time.

In addition, the result report 1200a may include an experiment time, a synthesis scheme, a condition reagent, and a reagent weight.

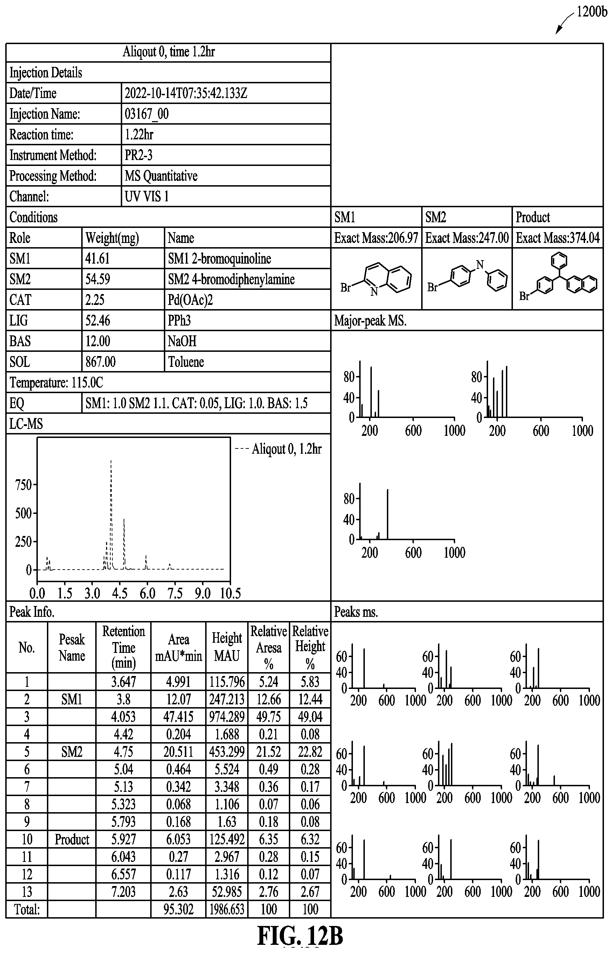

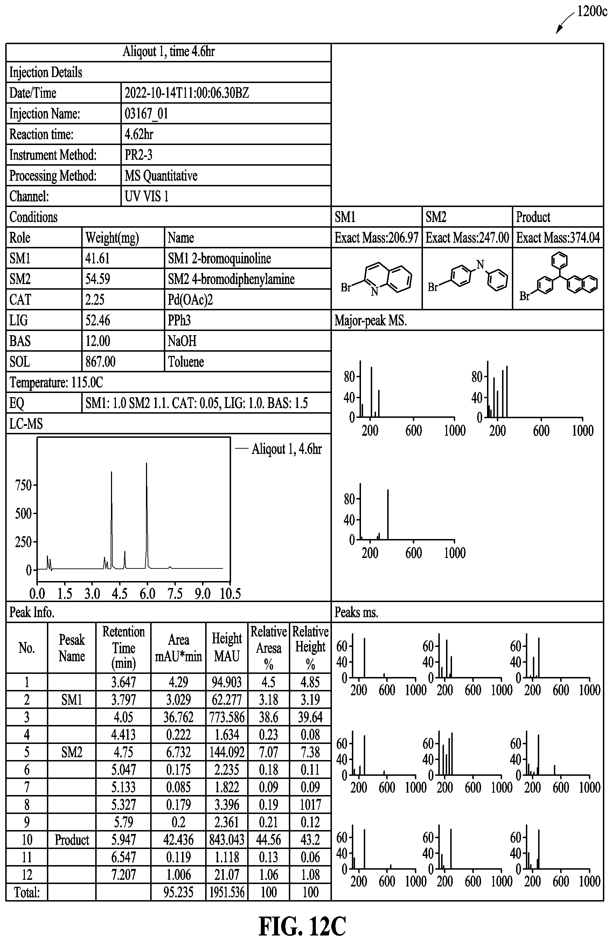

FIGS. 12B and 12C illustrate result reports 1200b and 1200c including detailed information on each reaction time. The result reports 1200b and 1200c of FIGS. 12B and 12C may include all peak information and a mass spectrum image for a by-product as well as a target material. FIG. 12B may be a report related to a sample of which a reaction time is 1.2 hours and FIG. 12C may be a report related to a sample of which a reaction time is 4.6 hours. The result reports 1200b and 1200c may include chromatogram images, all peak information, a mass spectrum of a target material, and mass spectrum images of all peaks.

The result reports 1200b and 1200c may include detailed information on each aliquot of mass spectrometry results. All peaks shown in the chromatogram may be numbered and may be matched to a corresponding mass spectrum, and may be stored. The analysis device may support an additional analysis for the user through the detailed result reports 1200b and 1200c. Information about a by-product may be intuitively provided from the detailed result reports 1200b and 1200c. A synthesis yield may increase when the by-product decreases. For reference, the result report may include synthesis information of the sample. The synthesis information may include the synthesis yield.

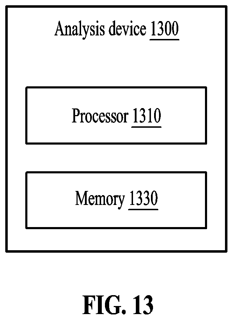

FIG. 13 is a block diagram illustrating a configuration of an analysis device according to an embodiment.

An analysis device 1300 in an embodiment may include a processor 1310 and a memory 1330.

The memory 1330 may store chromatography data, mass spectra, and results of analyzing peaks. The memory 1330 may also store instructions to be executed by the processor as described herein.

The processor 1310 may obtain chromatography data of a plurality of materials separated from a sample based on LC. The processor 1310 may obtain mass spectra corresponding to the peaks of the chromatography data based on mass spectrometry of the plurality of separated materials. The processor 1310 may determine a peak corresponding to a target material from peaks detected in the chromatography data based on the obtained mass spectra. The processor 1310 may select a protocol for separating the sample based on a result of analyzing the peak corresponding to the target material. However, the operation of the processor 1310 is not limited thereto, and the processor 1310 may perform the operations described with reference to FIGS. 1 to 12C.

The processor 1310 of the analysis device 1300 may provide a result report including a synthesis yield to a synthesis planning device. The synthesis yield may be determined based on a starting material SM1 and a product. Accordingly, the processor 1310 may identify and assign a peak corresponding to the starting material SM1 and the product and may select a protocol based on the product.

The analysis device 1300 and the material analysis system may perform the separation and detection of various materials in a chemical industry (e.g., bio and electronic materials). The material analysis system may automate the analysis of an LC-MS device. The material analysis system may automatically perform selection of a measurement condition, automation of peak selection, peak assignment, peak information confirmation, and result organization by applying an LC-MS closed-loop system to various material analysis fields. The material analysis system may identify the generation of a product and reaction kinetics and may also automatically provide an analysis result to the synthesis planning device. The reaction velocity may be determined from the peak information (e.g., a peak area) to which the target materials are assigned described above. The synthesis yield may be determined based on a peak area value of a product compared to a peak area value of a starting material. The material analysis system may provide a yield value for a selected synthesis condition to the synthesis planning device. The material analysis system may select a following synthesis condition based on a synthesis condition (e.g., an equivalence ratio, a type of condition reagent, a reaction temperature) in which a yield rate is high.

The material analysis system may accelerate material synthesis. The material analysis system may reduce the time and cost a researcher consumes for separating, detecting, analyzing, and reporting a sample. The material analysis system may reduce the time consumed for measurement condition selection, measurement result analysis, and a result report according to data processing. The material analysis system may provide a universal analysis by field for various materials. The material analysis system may analyze various materials without the limitation of a field. Even if a measurement environment (e.g., the specification of measurement equipment, a type or size of a column, and flow velocity, composition, and a ratio of a mobile phase) changes, the material analysis system may provide a universal analysis through the correlation between a peak of LC and mass spectrometry. Without millions of pieces of training data, the material analysis system may universally select a protocol in various fields based on a chemical characteristic of a target material and a peak analysis result (e.g., a retention time).

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

At least one of the devices, units, components, modules, units, or the like represented by a block or an equivalent indication in the above embodiments including, but not limited to, FIGS. 1, 2 and 13, may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein)

The above-described devices may be configured to act as one or more software modules in order to perform the operations of the above-described examples, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A sample analysis method comprising:

    obtaining chromatography data of a plurality of separated materials that are separated from a sample;
    obtaining mass spectra corresponding to first peaks of the chromatography data;
    determining, based on the obtained mass spectra, at least one peak corresponding to a target material from the first peaks of the chromatography data; and
    selecting a protocol for separating the sample based on a result of analyzing the at least one peak corresponding to the target material.

2. The method of claim 1, wherein the determining the at least one peak corresponding to the target material comprises assigning a peak of the at least one peak to the target material, and
wherein the assigned peak corresponds to a time at which a mass spectrum that matches a mass pattern of the target material appears in the mass spectra.

3. The method of any preceding claim, wherein the determining of the at least one peak corresponding to the target material is performed based on a comparison between a mass pattern corresponding to the target material and a measured ion count of a mass-to-charge ratio of interest in each peak of the first peaks of the chromatography data.

4. The method of any preceding claim, wherein the determining of the at least one peak corresponding to the target material comprises:
excluding a peak among the first peaks of the chromatography data having a determined score that is less than a threshold score.

5. The method of any preceding claim, wherein the determining of the at least one peak corresponding to the target material is performed by using a first score based on an ion count of a mass-to-charge ratio of interest for each of the first peaks of the chromatography data and a second score based on an ion count of a protonated mass-to-charge ratio.

6. The method of any preceding claim, wherein the determining of the at least one peak corresponding to the target material comprises determining a greatest ion count; and
wherein the greatest ion count corresponds to an ion count of a mass-to-charge ratio of interest within a mass-to-charge ratio range set based a scan margin of an equipment configured to measure mass-to-charge ratios.

7. The method of any preceding claim, wherein the obtaining of the chromatography data comprises:
performing liquid chromatography in a protocol selected based on a partition coefficient.

8. The method of any preceding claim, wherein the selecting of the protocol for separating the sample comprises:
determining whether to change the selected protocol based on retention times of the at least one peak, and optionally further comprising:

determining to change the selected protocol from a first protocol to a second protocol; and
based on changing the selected protocol to the second protocol, repeating the operations of obtaining chromatography data, obtaining the mass spectra, and determining the at least one peak, in the second protocol.

9. The method of any preceding claim, further comprising:

providing the selected protocol to a robot configured to generate a reaction of materials to prepare the sample, and
dispensing the sample and an eluent for analyzing the sample.

10. An analysis device comprising:

a memory storing instructions; and
a processor configured to execute the instructions to:

obtain chromatography data of a plurality of separated materials that are separated from a sample;
obtain mass spectra corresponding to first peaks of the chromatography data;
determine, based on the obtained mass spectra, at least one peak corresponding to a target material from the first peaks of the chromatography data; and
select a protocol for separating the sample based on a result of analyzing the at least one peak corresponding to the target material.

11. The analysis device of claim 10, wherein the processor is further configured to execute the instructions to assign a peak of the at least one peak to the target material, and
wherein the assigned peak corresponds to a time at which a mass spectrum that matches a mass pattern of the target material appears in the mass spectra.

12. The analysis device of claim 10 or 11, wherein the processor is configured to execute the instructions to determine the at least one peak corresponding to the target material based on a comparison between a mass pattern corresponding to the target material and a measured ion count of a mass-to-charge ratio of interest in each peak of the first peaks of the chromatography data.

13. The analysis device of any of claims 10 to 12, wherein the processor is configured to execute the instructions to determine the at least one peak corresponding to the target material by excluding a peak among the first peaks of the chromatography data having a determined score that is less than a threshold score.

14. The analysis device of any of claims 10 to 13, wherein the processor is configured to execute the instructions to determine the at least one peak corresponding to the target material using a first score based on an ion count of a mass-to-charge (m/z) ratio of interest for each of the first peaks of the chromatography data and a second score based on an ion count of a protonated mass-to-charge ratio.

15. The analysis device of any of claims 10 to 14, wherein the processor is configured to execute the instructions to determine the at least one peak corresponding to the target material by determining a greatest ion count, and
wherein the greatest ion count corresponds to an ion count of a mass-to-charge ratio of interest within a mass-to-charge ratio range set based on a scan margin of an equipment configured to measure a mass-to-charge ratio.

FIG. 1

**FIG. 2**

EP 4 617 655 A1

```
                        ┌──────────────┐
                        │    Start     │
                        └──────┬───────┘
                               │
                               ▼
        ┌──────────────────────────────────────────────────┐
        │         Obtain chromatography data               │── 310
        └──────────────────────┬───────────────────────────┘
                               │
                               ▼
        ┌──────────────────────────────────────────────────┐
        │            Obtain mass spectrum                  │── 330
        └──────────────────────┬───────────────────────────┘
                               │
                               ▼
        ┌──────────────────────────────────────────────────┐
        │ Determine peak corresponding to target material  │
        │ from peaks detected in chromatography based on   │── 350
        │ mass spectra                                     │
        └──────────────────────┬───────────────────────────┘
                               │
                               ▼
        ┌──────────────────────────────────────────────────┐
        │ Select protocol for separating sample based on   │
        │ result of analyzing peak corresponding to target │── 370
        │ material                                         │
        └──────────────────────┬───────────────────────────┘
                               │
                               ▼
                        ┌──────────────┐
                        │     End      │
                        └──────────────┘
```

# FIG. 3

400

FIG. 4

FIG. 5

FIG. 6

FIG. 7

FIG. 8

900

PR1-1 — 911

901
LogP of p
< 8
>= 8 or x

(4min <= P <= 7.5min)
& (SM1 > 1.16min or X)
PR1-1 — 921

(4min <= P <= 7.5min)
& (SM1 <= 1.16min)
PR1-1 — 922

(P > 7.5min or x)
PR2-2 — 923

(P < 4min)
None — 924

912 — PR2-2

(4min <= P <= 7.5min)
& (SM1 > 1.16min or X)
PR2-2 — 931

(4min <= P <= 7.5min)
& (SM1 <= 1.16min)
PR2-1 — 932

(P > 7.5min or x)
PR2-3 — 933

(P < 4min)
PR1-1 — 934

FIG. 9

**FIG. 10A**

EP 4 617 655 A1

**FIG. 10B**

**FIG. 10C**

EP 4 617 655 A1

**FIG. 10D**

From 911

(P X)

1010d — PR2-3

(4min <= P <= 7.5min) & (SM1 > 1.16min or X) → PR2-3 — 1021d

(4min <= P <= 7.5min) & (SM1 <= 1.16min) → PR2-3 — 1022d

(P > 7.5min or < 4min) → None — 1023d

(P X) → None — 1024d

Next aliquot — 1030d

**FIG. 11A**

EP 4 617 655 A1

FIG. 11B

**FIG. 11C**

From 912

(P < 4min)

934

PR1-1

- (4min <= P <= 7.5min) & (SM1 > 1.16min or X) → PR1-1 — 1131c
- (4min <= P <= 7.5min) & (SM1 <= 1.16min) → PR1-1 — 1132c
- (P > 7.5min or x) → PR1-2 — 1133c
- (P < 4min) → None — 1134c

PR1-2

- (4min <= P <= 7.5min) & (SM1 > 1.16min or X) → PR1-2 — 1141c
- (4min <= P <= 7.5min) & (SM1 <= 1.16min) → PR2-1 — 1142c
- (P > 7.5min or x) → PR2-1 — 1143c
- (P < 4min) → None — 1144c

- (4min <= P <= 7.5min) & (SM1 > 1.16min or X) → PR2-1 — 1151c
- (4min <= P <= 7.5min) & (SM1 <= 1.16min) → PR2-1 — 1152c
- (P < 4min or > 7.5min or X) → PR1-2 — 1153c
- (4min <= P <= 7.5min) & (SM1 > 1.16min or X) → PR1-1 — 1154c
- (4min <= P <= 7.5min) & (SM1 <= 1.16min) → PR2-1 — 1155c
- (P < 4min or > 7.5min or X) → None — 1156c

1200a

| Summary | | | | |
|---|---|---|---|---|
| **Injection Details** | | | | |
| Date/Time | 2022-10-14T15:23:39.621Z | | | |
| Injection Name: | 03167 | | | |
| Instrument Method: | PR2-3 | | | |
| Processing Method: | MS Quantitative | | | |
| Channel: | UV VIS 1 | | | |

| Conditions | | | SM1 | SM2 | Product |
|---|---|---|---|---|---|
| Role | Weight(mg) | Name | Exact Mass:206.97 | Exact Mass:247.00 | Exact Mass:374.04 |
| SM1 | 41.61 | SM1 2-bromoquinoline | | | |
| SM2 | 54.59 | SM2 4-bromodiphenylamine | | | |
| CAT | 2.25 | Pd(OAc)2 | | | |
| LIG | 52.46 | PPh3 | | | |
| BAS | 12.00 | NaOH | | | |
| SOL | 867.00 | Toluene | | | |
| Temperature: 115.0C | | | | | |
| EQ | SM1: 1.0 SM2 1.1. CAT: 0.05, LIG: 1.0. BAS: 1.5 | | | | |

**LC-MS**

--- Aliqout 0, 1.2hr
— Aliqout 1, 4.6hr
–·– Aliqout 2, 6.8hr
— Aliqout 3, 9.0hr

**Peak Info.**

| No. | Pesak Name | Retention Time (min) | Area mAU*min | Height MAU | Relative Aresa % | Relative Height % |
|---|---|---|---|---|---|---|
| Aliq.0 | SM1 | 3.8 | 12.07 | 247.213 | 12.66 | 12.44 |
| | SM2 | 4.75 | 20.511 | 453.299 | 21.52 | 22.82 |
| | Product | 5.927 | 6.053 | 125.492 | 6.35 | 6.32 |
| Aliq.1 | SM1 | 3.797 | 3.029 | 62.277 | 3.18 | 3.19 |
| | SM2 | 4.75 | 6.732 | 144.092 | 7.07 | 7.38 |
| | Product | 5.927 | 42.436 | 843.043 | 44.56 | 43.2 |
| Aliq.2 | SM2 | 4.747 | 2.168 | 48.604 | 1.99 | 2.21 |
| | Product | 5.947 | 61.619 | 1210.711 | 56.5 | 22.15 |
| Aliq.3 | SM2 | 4.75 | 1.278 | 31.792 | 1.22 | 1.49 |
| | Product | 5.95 | 54.884 | 1088.473 | 52.21 | 51.14 |

## FIG. 12A

1200b

| Aliqout 0, time 1.2hr | |
|---|---|
| Injection Details | |
| Date/Time | 2022-10-14T07:35:42.133Z |
| Injection Name: | 03167_00 |
| Reaction time: | 1.22hr |
| Instrument Method: | PR2-3 |
| Processing Method: | MS Quantitative |
| Channel: | UV VIS 1 |

| Conditions | | | SM1 | SM2 | Product |
|---|---|---|---|---|---|
| Role | Weight(mg) | Name | Exact Mass:206.97 | Exact Mass:247.00 | Exact Mass:374.04 |
| SM1 | 41.61 | SM1 2-bromoquinoline | | | |
| SM2 | 54.59 | SM2 4-bromodiphenylamine | | | |
| CAT | 2.25 | Pd(OAc)2 | | | |
| LIG | 52.46 | PPh3 | Major-peak MS. | | |
| BAS | 12.00 | NaOH | | | |
| SOL | 867.00 | Toluene | | | |

Temperature: 115.0C

EQ: SM1: 1.0 SM2 1.1. CAT: 0.05, LIG: 1.0. BAS: 1.5

LC-MS

--- Aliqout 0, 1.2hr

Peak Info.

Peaks ms.

| No. | Pesak Name | Retention Time (min) | Area mAU*min | Height MAU | Relative Aresa % | Relative Height % |
|---|---|---|---|---|---|---|
| 1 | | 3.647 | 4.991 | 115.796 | 5.24 | 5.83 |
| 2 | SM1 | 3.8 | 12.07 | 247.213 | 12.66 | 12.44 |
| 3 | | 4.053 | 47.415 | 974.289 | 49.75 | 49.04 |
| 4 | | 4.42 | 0.204 | 1.688 | 0.21 | 0.08 |
| 5 | SM2 | 4.75 | 20.511 | 453.299 | 21.52 | 22.82 |
| 6 | | 5.04 | 0.464 | 5.524 | 0.49 | 0.28 |
| 7 | | 5.13 | 0.342 | 3.348 | 0.36 | 0.17 |
| 8 | | 5.323 | 0.068 | 1.106 | 0.07 | 0.06 |
| 9 | | 5.793 | 0.168 | 1.63 | 0.18 | 0.08 |
| 10 | Product | 5.927 | 6.053 | 125.492 | 6.35 | 6.32 |
| 11 | | 6.043 | 0.27 | 2.967 | 0.28 | 0.15 |
| 12 | | 6.557 | 0.117 | 1.316 | 0.12 | 0.07 |
| 13 | | 7.203 | 2.63 | 52.985 | 2.76 | 2.67 |
| Total: | | | 95.302 | 1986.653 | 100 | 100 |

**FIG. 12B**

1200c

| Aliqout 1, time 4.6hr | | |
|---|---|---|
| Injection Details | | |
| Date/Time | 2022-10-14T11:00:06.30BZ | |
| Injection Name: | 03167_01 | |
| Reaction time: | 4.62hr | |
| Instrument Method: | PR2-3 | |
| Processing Method: | MS Quantitative | |
| Channel: | UV VIS 1 | |

| Conditions | | | SM1 | SM2 | Product |
|---|---|---|---|---|---|
| Role | Weight(mg) | Name | Exact Mass:206.97 | Exact Mass:247.00 | Exact Mass:374.04 |
| SM1 | 41.61 | SM1 2-bromoquinoline | | | |
| SM2 | 54.59 | SM2 4-bromodiphenylamine | | | |
| CAT | 2.25 | Pd(OAc)2 | | | |
| LIG | 52.46 | PPh3 | Major-peak MS. | | |
| BAS | 12.00 | NaOH | | | |
| SOL | 867.00 | Toluene | | | |
| Temperature: 115.0C | | | | | |
| EQ | SM1: 1.0 SM2 1.1. CAT: 0.05, LIG: 1.0. BAS: 1.5 | | | | |
| LC-MS | | | | | |

— Aliqout 1, 4.6hr

Peak Info.

Peaks ms.

| No. | Pesak Name | Retention Time (min) | Area mAU*min | Height MAU | Relative Aresa % | Relative Height % |
|---|---|---|---|---|---|---|
| 1 | | 3.647 | 4.29 | 94.903 | 4.5 | 4.85 |
| 2 | SM1 | 3.797 | 3.029 | 62.277 | 3.18 | 3.19 |
| 3 | | 4.05 | 36.762 | 773.586 | 38.6 | 39.64 |
| 4 | | 4.413 | 0.222 | 1.634 | 0.23 | 0.08 |
| 5 | SM2 | 4.75 | 6.732 | 144.092 | 7.07 | 7.38 |
| 6 | | 5.047 | 0.175 | 2.235 | 0.18 | 0.11 |
| 7 | | 5.133 | 0.085 | 1.822 | 0.09 | 0.09 |
| 8 | | 5.327 | 0.179 | 3.396 | 0.19 | 1017 |
| 9 | | 5.79 | 0.2 | 2.361 | 0.21 | 0.12 |
| 10 | Product | 5.947 | 42.436 | 843.043 | 44.56 | 43.2 |
| 11 | | 6.547 | 0.119 | 1.118 | 0.13 | 0.06 |
| 12 | | 7.207 | 1.006 | 21.07 | 1.06 | 1.08 |
| Total: | | | 95.235 | 1951.536 | 100 | 100 |

**FIG. 12C**

Analysis device 1300

Processor 1310

Memory 1330

**FIG. 13**

# EUROPEAN SEARCH REPORT

**Application Number**

EP 25 16 2568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/178888 A1 (MAEDA KAZUMA [JP]) 9 June 2022 (2022-06-09) * paragraphs [0039], [0049] - [0054], [0080], [0087] - [0089]; figure 1 * | 1-15 | INV. G01N30/86 |
| A | US 2019/336886 A1 (HYCKENBERG KEY [SE] ET AL) 7 November 2019 (2019-11-07) * paragraphs [0005], [0019], [0048], [0065] * | 1-15 | |
| A | US 2022/351955 A1 (PARK ROBIN [US] ET AL) 3 November 2022 (2022-11-03) * paragraphs [0022], [0023], [0027] * | 1-15 | |

**TECHNICAL FIELDS SEARCHED (IPC)**

G01N

The present search report has been drawn up for all claims

| Place of search | Date of completion of the search | Examiner |
|---|---|---|
| Munich | 8 July 2025 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 16 2568

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | Publication date | Patent family member(s) | Publication date |
|---|---|---|---|
| US 2022178888 A1 | 09-06-2022 | CN 113227778 A | 06-08-2021 |
| | | JP 7173293 B2 | 16-11-2022 |
| | | JP 7409462 B2 | 09-01-2024 |
| | | JP 2023012485 A | 25-01-2023 |
| | | JP WO2020194582 A1 | 28-10-2021 |
| | | US 2022178888 A1 | 09-06-2022 |
| | | WO 2020194582 A1 | 01-10-2020 |
| US 2019336886 A1 | 07-11-2019 | CN 110325853 A | 11-10-2019 |
| | | EP 3563148 A1 | 06-11-2019 |
| | | JP 7076454 B2 | 27-05-2022 |
| | | JP 2020516856 A | 11-06-2020 |
| | | US 2019336886 A1 | 07-11-2019 |
| | | WO 2018122196 A1 | 05-07-2018 |
| US 2022351955 A1 | 03-11-2022 | CN 115290741 A | 04-11-2022 |
| | | DE 102022108524 A1 | 03-11-2022 |
| | | GB 2607424 A | 07-12-2022 |
| | | GB 2635485 A | 14-05-2025 |
| | | IE 20220067 A2 | 18-01-2023 |
| | | US 2022351955 A1 | 03-11-2022 |

EPO FORM P0459

For more details about this annex : see Official Journal of the European Patent Office, No. 12/82